# FASCICULE DE BREVET EUROPEEN

(11) **EP 3 104 162 B1**
(45) Date de publication et mention de la délivrance du brevet: **11.08.2021**
(21) Numéro de dépôt: 16173178.1
(22) Date de dépôt: 06.06.2016
(51) Int. Cl.: G01N 21/17, G01N 29/24

(54) **DISPOSITIF DE DETECTION PHOTOACOUSTIQUE MODULAIRE**
MODULARE FOTOAKUSTISCHE DETEKTIONSVORRICHTUNG
MODULAR PHOTOACOUSTIC DETECTION DEVICE

(30) Priorité: 08.06.2015 FR 1555200
(43) Date de publication de la demande: 14.12.2016
(73) Titulaire: COMMISSARIAT À L'ÉNERGIE ATOMIQUE ET AUX ÉNERGIES ALTERNATIVES, 75015 Paris (FR)
(72) Inventeur: ROUXEL, Justin, 38400 SAINT MARTIN D'HERES (FR); BRUN, Mickaël, 38320 EYBENS (FR); GLIERE, Alain, 38000 GRENOBLE (FR); NICOLETTI, Sergio, 38650 SINARD (FR)
(74) Mandataire: Brevalex

(56) Documents cités:
- US-A1- 2009 174 884
- US-A1- 2010 139 368
- US-A1- 2012 151 995
- US-A1- 2013 008 229
- NICOLETTI S ET AL: "Challenges in the realization of a fully integrated optical lab-on-chip", IEEE SENSORS 2014 PROCEEDINGS, IEEE, 2 novembre 2014 (2014-11-02), pages 649-652, XP032705458, DOI: 10.1109/ICSENS.2014.6985082
- ALAIN GLIÈRE ET AL: "Challenges in the Design and Fabrication of a Lab-on-a-Chip Photoacoustic Gas Sensor", SENSORS, vol. 14, no. 1, 8 janvier 2014 (2014-01-08), pages 957-974, XP055261062, DOI: 10.3390/s140100957
- A. GLIÈRE ET AL: "A Coupled Model for the Simulation of Miniaturized and Integrated Photoacoustic Gas Detector", INTERNATIONAL JOURNAL OF THERMOPHYSICS, vol. 34, no. 11, 23 novembre 2013 (2013-11-23), pages 2119-2135, XP055146817, ISSN: 0195-928X, DOI: 10.1007/s10765-013-1534-8
- ROUXEL J ET AL: "Development of a Miniaturized Differential Photoacoustic Gas Sensor", PROCEDIA ENGINEERING, vol. 120, 2015, pages 396-399, XP029268394, ISSN: 1877-7058, DOI: 10.1016/J.PROENG.2015.08.650

## Description

### DOMAINE TECHNIQUE ET ART ANTÉRIEUR

L'invention concerne le domaine des dispositifs de détection photoacoustique miniaturisés, et notamment celui des capteurs de gaz miniaturisés faisant appel à un effet photoacoustique pour mesurer la concentration de certains éléments gazeux.

Le principe d'une mesure d'un gaz par effet photoacoustique repose sur l'excitation d'une onde acoustique dans le gaz par une source lumineuse telle qu'un laser pulsé ou modulé en amplitude ou en longueur d'onde. La longueur d'onde du rayonnement, par exemple dans le moyen-infrarouge (MIR), le proche infrarouge (NIR), ou le domaine visible ou UV, émis par le laser est choisie pour interagir spécifiquement avec les molécules du gaz à détecter. L'émission de la source lumineuse étant modulée, l'énergie absorbée par les molécules gazeuses est restituée sous la forme d'un échauffement transitoire qui génère une onde de pression, elle-même mesurée par un détecteur acoustique tel qu'un microphone. Bien que l'effet photoacoustique soit connu depuis longtemps, son utilisation pour une mesure de gaz a été rendue possible par la mise en œuvre de sources lumineuses monochromatiques telles que les lasers, et de microphones sensibles tels que les microphones capacitifs à électrets.

La détection est améliorée en confinant le gaz dans une cavité et en modulant le laser à une fréquence de résonance acoustique de la cavité. L'amplitude de l'onde acoustique obtenue est directement liée à la concentration du composé gazeux recherché dans le gaz présent dans la cavité excitée.

L'efficacité de la détection repose en grande partie sur le couplage efficace du flux lumineux issu du laser avec le gaz contenu dans la cavité résonnante car le signal mesuré est proportionnel à l'énergie absorbée, puis dissipée, par le gaz.

Le document WO 03/083455 A1 décrit un dispositif de mesure photoacoustique permettant de détecter la présence d'un gaz et comportant une structure particulière de cellule photoacoustique dite « Differential Helmholtz Resonator » (DHR), ou résonateur acoustique différentiel de type Helmholtz. Une telle cellule photoacoustique comporte deux chambres identiques reliées entre elles par deux capillaires. La résonance acoustique est produite en excitant une seule des deux chambres. A la résonance, les pressions dans les deux chambres oscillent en opposition de phase. Les pressions dans les chambres sont mesurées par des microphones placés sur les parois des deux chambres. Avec un tel résonateur, le calcul de la différence entre les signaux issus de chaque chambre, qui correspond au signal utile, permet d'augmenter l'amplitude du signal mesuré et d'éliminer une partie du bruit environnant, et donc d'avoir au final un bon rapport signal sur bruit.

Un tel dispositif a toutefois pour inconvénients d'être limité à un appareil de laboratoire non miniaturisé, d'avoir des longueurs d'onde de transmission limitées, d'être sensible aux variations de température et aux vibrations, et d'avoir de fortes contraintes de positionnement et d'alignement de ses éléments pour sa réalisation.

Le document EP 2 515 096 A1 décrit un dispositif de détection de gaz photoacoustique comportant un résonateur photoacoustique miniaturisé intégré sur silicium de type DHR. La structure de ce détecteur est obtenue par la mise en œuvre de techniques du domaine de la microélectronique dans plusieurs substrats collés entre eux. Le processus de fabrication impose de placer le guide d'onde MIR, qui permet d'injecter le signal optique laser dans l'une des deux chambres, dans la partie inférieure du substrat central qui est aminci à une épaisseur déterminée par la hauteur des chambres. L'ensemble du dispositif est réalisé sous la forme d'un unique circuit nano-photonique intégrant tous les éléments du dispositif.

L'article écrit par NICOLETTI S ET AL: "Challenges in the realization of a fully integrated optical lab-on-chip", IEEE SENSORS 2014 PROCEEDINGS, IEEE, 2 novembre 2014, pages 649-652, décrit des réalisations récentes dans la réalisation d'un capteur optique miniaturisé basé sur la détection photoacoustique et illustre le potentiel de la co-intégration des technologies de circuits intégrés photoniques à base de Si, IC / MEMS et QCL.

Ainsi, ce dispositif est miniaturisé, ce qui présente de nombreux avantages. En effet, cette miniaturisation permet d'avoir un plus fort signal de pression produit par le capteur du fait que ce signal croît quand la taille du résonateur est réduite. Les résonateurs DHR sont particulièrement bien adaptés à la miniaturisation et à l'intégration sur silicium car ils sont relativement insensibles à la localisation du dépôt d'énergie thermique et car, la pression étant quasi-constante dans chaque chambre, il est possible de multiplier le nombre de microphones par chambre pour améliorer le rapport signal sur bruit.

Par contre, la structure monolithique de ce dispositif pose plusieurs inconvénients.

En effet, après une ou plusieurs détections de gaz, les chambres de la cellule photoacoustique peuvent être contaminées par le ou les gaz détectés. Il est également possible que les microphones ne fonctionnent plus après plusieurs détections de gaz. Or, avec une telle structure monolithique, il est alors nécessaire de remplacer tout le dispositif de détection pour réaliser de nouvelles détections de gaz.

De plus, pour pouvoir réaliser la détection de différents gaz, le dispositif fait nécessairement appel à plusieurs sources laser différentes, ce qui représente un coût important pour la réalisation du dispositif de détection. Cela est d'autant plus problématique lorsque la contamination des chambres de la cellule photoacoustique impose le remplacement de ces différentes sources laser.

### EXPOSÉ DE L'INVENTION

Un but de la présente invention est de proposer un dispositif de détection photoacoustique ne posant pas les problèmes liés aux dispositifs de détection monolithiques de l'art antérieur, c'est-à-dire ne nécessitant pas un replacement de l'ensemble du dispositif de détection lorsque les chambres de la cellule photoacoustique sont contaminées par les gaz, et qui puisse servir à la détection de différents gaz sans avoir à intégrer nécessairement différentes sources lumineuses au dispositif.

Pour cela, la présente invention propose un dispositif de détection photoacoustique modulaire comportant au moins :
- une cellule photoacoustique comprenant au moins deux chambres reliées par au moins deux capillaires et formant un résonateur acoustique différentiel de type Helmholtz ;
- des détecteurs acoustiques couplés aux chambres ;
- une source lumineuse apte à émettre un faisceau lumineux ayant au moins une longueur d'onde apte à exciter un gaz destiné à être détecté et modulable à une fréquence de résonance de la cellule photoacoustique ;
- un premier circuit photonique couplant optiquement la source lumineuse à une face d'entrée d'une première des chambres ;
dans lequel le dispositif de détection comprend un premier logement qui est formé dans la cellule acoustique et qui débouche sur la face d'entrée de la première chambre, et dans lequel le premier circuit photonique est disposé de manière amovible dans ledit premier logement.

Grâce au caractère amovible du premier circuit photonique, ce dispositif de détection photoacoustique est modulaire. Ainsi, la source lumineuse, le premier circuit photonique et la cellule photoacoustique forment des éléments pouvant être démontés les uns des autres et sont donc remplaçables indépendamment les uns des autres lorsque l'un de ces éléments est défaillant. Par exemple, si les chambres de la cellule photoacoustique sont contaminées suite à une détection de gaz, seule la cellule photoacoustique peut être remplacée et la nouvelle cellule photoacoustique peut être couplée aux autres éléments du dispositif qui sont conservés (circuit photonique, source lumineuse, etc.). Si la source lumineuse devient défaillante, il est possible de la remplacer sans avoir à remplacer la cellule photoacoustique et le premier circuit photonique. De même, lorsque les détecteurs acoustiques de fonctionnent plus, il est possible de les remplacer sans avoir à changer la source lumineuse et le premier circuit photonique.

Le caractère modulaire du dispositif de détection est également avantageux car il est possible de changer facilement la source lumineuse afin de détecter différents gaz en utilisant la même cellule photoacoustique. Cela évite de devoir intégrer plusieurs sources différentes au dispositif de détection.

Ces avantages permettent une diminution des coûts de fonctionnement du dispositif de détection photoacoustique. Il est ainsi possible de produire en masse ces dispositifs pouvant servir à la surveillance des gaz à intérêt atmosphérique, par exemple dans la prévision de fuites de gaz dans un temps réduit dans l'industrie ou pour la détection de gaz toxique par exemple dans les avions.

Le dispositif de détection photoacoustique peut être qualifié de « miniaturisé », c'est-à-dire avoir des dimensions latérales inférieures à environ 10 cm.

Un circuit photonique ne correspond pas à une fibre optique. En effet, un circuit photonique est un circuit réalisé sur un substrat de matériau, par exemple en semi-conducteur, ce qui n'est pas le cas d'une fibre optique. En outre, un circuit photonique a une structure planaire, contrairement à une fibre optique qui a une structure cylindrique.

De plus, un circuit photonique peut comporter différentes fonctionnalités. Ainsi, un circuit photonique peut former un circuit multiplexeur (avec plusieurs entrées et une sortie) et/ou démultiplexeur. Un circuit photonique peut également former un collimateur et/ou réaliser une fonction d'entonnoir (ou « bundle » en anglais) comprenant plusieurs entrées et plusieurs sorties, ce qui permet de limiter l'encombrement par rapport à l'utilisation de plusieurs fibres optiques si plusieurs longueurs d'ondes sont émises par la source lumineuse.

De plus, un circuit photonique est bien adapté pour transmettre des longueurs d'ondes comprises entre environ 3 et 12 µm, voire entre environ 3 et 14 µm, ce qui est bien adapté pour réaliser une détection de gaz. La gamme de longueurs d'ondes pouvant être transmises par une fibre optique est plus limitée que celles pouvant être transmises par un circuit photonique. Par exemple, les fibres optiques à base de ZrF₄ peuvent transmettre des longueurs d'ondes allant du domaine visible jusqu'à environ 4,5 µm, et celles à base d'InF₃ peuvent transmettre des longueurs d'ondes allant du domaine visible jusqu'à environ 6 µm. Les fibres optiques à base de chalcogénure peuvent transmettre des longueurs d'ondes comprises entre 1 et 8 µm mais elles sont chères, fragiles et la connectique de ces fibres est absente ou au mieux complexe à réaliser.

Les fibres optiques posent également un problème d'encombrement par rapport à un circuit photonique, en raison notamment de leur rayon de courbure important rendant leur intégration difficile. De plus, la gaine d'une fibre optique a une taille minimale de 125 µm, voire de 250 µm, ce qui les rend difficile à coller directement sur une fenêtre d'entrée d'une chambre d'une cellule photoacoustique.

Enfin, les fibres optiques requièrent une précision d'alignement plus importante que celle requise pour un circuit photonique.

Les détecteurs acoustiques peuvent être couplés de manière amovible à la cellule photoacoustique. Ainsi, les détecteurs acoustiques peuvent être remplacés ou conservés indépendamment de la cellule photoacoustique, augmentant ainsi le caractère modulaire du dispositif.

La cellule photoacoustique peut être formée par un empilement de plusieurs couches de matériaux. Les éléments de la cellule peuvent être gravés dans les couches de matériaux.

Selon un premier exemple de réalisation, la cellule photoacoustique peut comporter au moins un empilement d'une première et d'une deuxième couches de matériau dans lesquelles peuvent être formés les chambres, les capillaires, le premier logement, au moins deux ouvertures pouvant déboucher chacune dans l'un des capillaires et au moins deux emplacements pouvant communiquer chacun avec l'une des chambres et dans lesquels les détecteurs acoustiques peuvent être disposés. Une telle configuration est particulièrement adaptée lorsque les éléments de la cellule photoacoustique sont réalisés par gravure chimique dans une partie de l'épaisseur des couches de matériau.

Dans le cas de ce premier exemple de réalisation :
- les emplacements peuvent être formés dans une partie de l'épaisseur de la première couche et peuvent traverser une face supérieure de la première couche ;
- les ouvertures peuvent traverser toute l'épaisseur de la première couche ;
- une première partie de chacune des chambres peut être formée dans une partie de l'épaisseur de la première couche et peut traverser une face inférieure de la première couche opposée à la face supérieure de la première couche ;
- les capillaires peuvent être formés dans une partie de l'épaisseur de la première couche et peuvent traverser la face inférieure de la première couche ;
- une deuxième partie de chacune des chambres peut être formée dans une partie de l'épaisseur de la deuxième couche et peut traverser une face supérieure de la deuxième couche qui est disposée contre la face inférieure de la première couche, les première et deuxième parties de chacune des chambres pouvant être disposées en regard l'une de l'autre ;
- le premier logement peut être formé dans une partie de l'épaisseur de la deuxième couche et peut traverser la face supérieure de la deuxième couche.

Selon un deuxième exemple de réalisation, la cellule photoacoustique peut comporter au moins un empilement d'une première, deuxième, troisième et quatrième couches de matériau dans lesquelles peuvent être formés les chambres, les capillaires, le premier logement, au moins deux ouvertures pouvant déboucher chacune dans l'un des capillaires et au moins deux emplacements pouvant communiquer chacun avec l'une des chambres et dans lesquels les détecteurs acoustiques peuvent être disposés. Le fait que les différents éléments de la cellule photoacoustique soient réalisés dans toute l'épaisseur d'au moins une des couches de l'empilement permet d'obtenir des motifs ayant des bords bien perpendiculaires les uns aux autres.

Dans le cas de ce deuxième exemple de réalisation :
- les capillaires peuvent traverser toute l'épaisseur de la deuxième couche, les première et troisième couches entre lesquelles se trouve la deuxième couche pouvant former des parois supérieure et inférieure des deux capillaires ;
- les chambres et le premier logement peuvent traverser toute l'épaisseur de la troisième couche, les deuxième et quatrième couches entre lesquelles se trouve la troisième couche pouvant former des parois supérieure et inférieure des chambres et du premier logement ;
- les emplacements peuvent traverser toute l'épaisseur de la quatrième couche ;
- les ouvertures peuvent traverser toute l'épaisseur des troisième et quatrième couches.

Selon un troisième exemple de réalisation, la cellule photoacoustique peut être formée d'une pièce monolithique de poudres fusionnées. Une telle cellule peut être réalisée par impression 3D.

Selon un premier exemple de couplage entre la source lumineuse et le premier circuit photonique, la source lumineuse peut être couplée optiquement à une face d'entrée du premier circuit photonique par au moins un système de collimation pouvant comporter au moins une lentille, et le premier circuit photonique peut former au moins un guide d'onde. Ce premier exemple de couplage est adapté notamment lorsque la source lumineuse émet un faisceau lumineux ayant une seule longueur d'onde.

Selon un deuxième exemple de couplage entre la source lumineuse et le premier circuit photonique, la source lumineuse peut être apte à émettre un faisceau lumineux ayant plusieurs longueurs d'onde et peut être disposée contre le premier circuit photonique qui forme un circuit multiplexeur - démultiplexeur à réseau de guides d'onde.

Selon un troisième exemple de couplage entre la source lumineuse et le premier circuit photonique, la source lumineuse peut être couplée optiquement à une face d'entrée du premier circuit photonique par au moins une fibre optique, et le premier circuit photonique peut former au moins un guide d'onde ou un circuit multiplexeur - démultiplexeur à réseau de guides d'onde.

Le dispositif peut comporter en outre au moins un premier système de refroidissement apte à réguler thermiquement la source lumineuse et, lorsque la source lumineuse n'est pas disposée contre le premier circuit photonique, un deuxième système de refroidissement apte à réguler thermiquement la cellule photoacoustique indépendamment de la source lumineuse. L'utilisation de deux systèmes de refroidissement distincts permet de gérer indépendamment les températures de fonctionnement de la source lumineuse (température par exemple comprise entre environ 19°C et 26°C) et de la cellule photoacoustique (température par exemple comprise entre environ 15°C et 20°C).

La cellule photoacoustique peut comporter en outre au moins un deuxième logement débouchant sur une face de sortie de la première chambre, et le dispositif peut comporter en outre au moins un deuxième circuit photonique pouvant coupler optiquement la face de sortie de la première chambre à un détecteur optique et disposé de manière amovible dans le deuxième logement. Dans cette configuration, le deuxième circuit photonique forme donc également une pièce pouvant être assemblée et/ou changée indépendamment des autres éléments du dispositif de détection.

La cellule photoacoustique peut être formée d'un ou plusieurs métaux. L'utilisation d'un ou plusieurs métaux pour former la cellule photoacoustique permet aux parois des chambres de réfléchir le faisceau lumineux, sans ajout de moyens de réflexion supplémentaires autour des chambres.

Une distance entre les deux capillaires peut être égale à environ la moitié de la longueur d'au moins une des chambres. Cette configuration permet d'avoir une meilleure homogénéité de la pression dans les chambres de la cellule photoacoustique.

L'invention porte également sur un dispositif de détection de gaz, comportant au moins un dispositif tel que décrit ci-dessus et des canaux d'entrée et de sortie de gaz communiquant avec les chambres du dispositif de détection photoacoustique, et dans lequel ladite au moins une longueur d'onde du faisceau lumineux apte à être émis par la source lumineuse correspond à au moins une longueur d'onde d'absorption d'au moins un gaz destiné à être détecté.

L'invention porte également sur un procédé de réalisation d'un dispositif de détection photoacoustique modulaire, comportant au moins les étapes de :
- réalisation d'au moins une cellule photoacoustique comprenant au moins deux chambres reliées par au moins deux capillaires et formant un résonateur acoustique différentiel de type Helmholtz ;
- couplage de détecteurs acoustiques aux chambres ;
- réalisation d'au moins une source lumineuse apte à émettre un faisceau lumineux ayant au moins une longueur d'onde apte à mettre en résonance la cellule photoacoustique ; et
- réalisation d'au moins un premier circuit photonique couplant optiquement la source lumineuse à une face d'entrée d'une première des chambres ; dans lequel le procédé comprend en outre l'étapes de :
- formation d'un premier logement dans la cellule acoustique qui débouche sur la face d'entrée de la première chambre ; et
- disposition dudit au moins un premier circuit photonique de manière amovible dans ledit premier logement.

Selon différents exemples de réalisation :
- la réalisation de la cellule photoacoustique peut comporter la réalisation d'au moins un empilement d'une première et d'une deuxième couches de matériau dans lesquelles sont formés, par gravure chimique mise en œuvre dans une partie de l'épaisseur de chacune des première et deuxième couches, les chambres, les capillaires, le premier logement, au moins deux ouvertures débouchant chacune dans l'un des capillaires et au moins deux emplacements communiquant chacun avec l'une des chambres et dans lesquels les détecteurs acoustiques sont disposés, ou
- la réalisation de la cellule photoacoustique peut comporter la réalisation d'au moins un empilement d'une première, deuxième, troisième et quatrième couches de matériau dans lesquelles sont formés, par gravure chimique ou laser mise en œuvre dans toute l'épaisseur de chacune des deuxième, troisième et quatrième couches, les chambres, les capillaires, le premier logement, au moins deux ouvertures débouchant chacune dans l'un des capillaires et au moins deux emplacements (132, 134) communiquant chacun avec l'une des chambres et dans lesquels les détecteurs acoustiques sont disposés, ou
- la cellule photoacoustique peut être formée d'une pièce monolithique de poudres métalliques fusionnées obtenue par impression 3D.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente schématiquement un dispositif de détection photoacoustique modulaire, objet de la présente invention, selon un mode de réalisation particulier ;
- les figures 2A à 5 représentent les étapes de réalisation de la cellule photoacoustique d'un dispositif de détection photoacoustique modulaire, objet de la présente invention, selon un premier exemple de réalisation ;
- la figure 6 représente la fréquence de résonance et l'homogénéité de pression dans la cellule photoacoustique d'un dispositif de détection photoacoustique modulaire, objet de la présente invention, en fonction de l'espacement entre les capillaires de la cellule photoacoustique ;
- la figure 7 représente l'amplitude du signal acoustique dans la cellule photoacoustique d'un dispositif de détection photoacoustique modulaire, objet de la présente invention, en fonction de la largeur des capillaires de la cellule photoacoustique ;
- les figures 8A à 8C représentent différentes configurations de couplage entre la source lumineuse et le premier circuit photonique du dispositif de détection photoacoustique modulaire, objet de la présente invention ;
- les figures 9 à 12 représentent chacune une couche de matériau d'un empilement formant la cellule photoacoustique d'un dispositif de détection photoacoustique modulaire, objet de la présente invention, selon un deuxième exemple de réalisation ;
- la figure 13 représente une cellule photoacoustique d'un dispositif de détection photoacoustique modulaire, objet de la présente invention, selon un troisième exemple de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

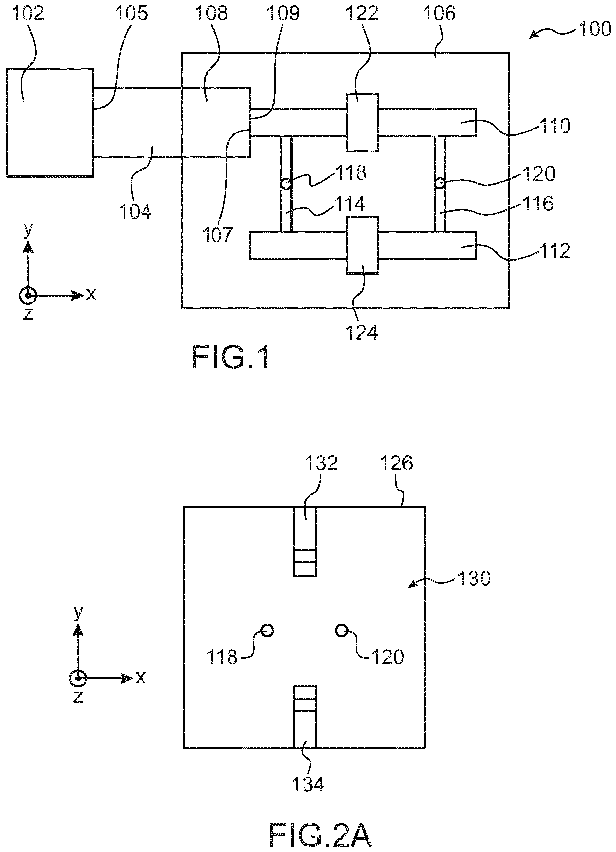

On se réfère tout d'abord à la figure 1 qui représente schématiquement un dispositif 100 de détection photoacoustique modulaire selon un mode de réalisation particulier. Ce dispositif 100 correspond ici à un dispositif de détection de gaz.

Le dispositif 100 comporte une source lumineuse 102 correspondant ici à un laser. Ce laser peut correspondre à un laser de type QCL (« Quantum cascade laser », ou laser à cascade quantique) ou ICL (« Interband cascade laser », ou laser à cascade interbande) émettant au moins une longueur d'onde dans le domaine MIR, par exemple à une longueur d'onde comprise entre environ 2 µm et 10 µm. Bien que non représentés, le dispositif 100 comporte également une alimentation électrique de la source lumineuse 102 ainsi que des moyens de modulation du faisceau lumineux émis à une fréquence de résonance acoustique de la cavité dans laquelle le faisceau lumineux est destiné à être envoyé. Par rapport à l'utilisation d'une source lumineuse qui ne serait pas collimatée, l'utilisation d'une source lumineuse 102 collimatée dans le dispositif 100, de part la réduction du bruit de fenêtre, permet d'augmenter grandement le facteur signal/bruit, par exemple d'un facteur 2. Le bruit de fenêtre correspond au signal acoustique parasite que toutes les parties solides émettent lorsqu'elles sont frappées par l'onde lumineuse modulée.

En variante, la source lumineuse 102 peut comporter plusieurs lasers, et correspond par exemple à une barrette lasers QCL ou ICL, émettant un faisceau lumineux formé de plusieurs longueurs d'onde différentes.

Le faisceau lumineux émis est ensuite transmis dans un premier circuit photonique 104 qui permet de transmettre le faisceau lumineux dans une cellule photoacoustique 106 du dispositif 100. Le premier circuit photonique 104 comporte une face d'entrée 105 couplée optiquement à la source lumineuse 102. Le couplage optique entre la source lumineuse 102 et le premier circuit photonique 104 peut être réalisé directement, par exemple en disposant la source lumineuse 102 contre le premier circuit photonique 104, ou via l'utilisation d'autres moyens qui seront décrits plus loin. Le premier circuit photonique 104 comporte également une face de sortie 107. Le premier circuit photonique 104 est inséré dans un premier logement 108 formé dans la cellule 106. Sur la figure 1, une partie du premier circuit photonique 104 comportant la face de sortie 107 est insérée dans ce premier logement 108, et une autre partie du premier circuit photonique 104 se trouve hors du premier logement 108.

La cellule photoacoustique 106 du dispositif 100 comporte des éléments correspondant à des cavités, ou évidements, qui sont :
- une première chambre 110 dans laquelle le gaz à détecter est destiné à être excité par le faisceau lumineux émis par la source 102, et dont une face d'entrée 109 destinée à recevoir le faisceau lumineux est couplée optiquement à la face de sortie 107 du circuit photonique 104 (du fait que les faces 107 et 109 sont parallèles l'une par rapport à l'autre et sont disposées l'une contre l'autre lorsque le premier circuit photonique 104 est inséré dans le premier logement 108) ;
- une deuxième chambre 112 ;
- deux capillaires 114 et 116 permettant de faire communiquer les volumes des chambres 110 et 112 entre eux.

La source lumineuse 102 est alignée avec le premier circuit photonique 104 afin d'injecter la lumière dans la première chambre 110, sans qu'une procédure d'alignement de la source lumineuse 102 vis-à-vis de la première chambre 110 soit nécessaire du fait que l'insertion du premier circuit photonique 104 dans le premier logement 108 réalise automatiquement cet alignement.

Les capillaires 114, 116 sont avantageusement reliés aux chambres 110, 112 au niveau de leurs faces latérales (faces parallèles au plan (X,Z) représenté sur la figure 1). Ainsi, les capillaires 114, 116 et les chambres 110, 112 peuvent être formés dans une même couche, ou plaque, de matériau, ce qui permet leur réalisation avec un nombre d'étapes de fabrication réduit. En variante, les capillaires 114, 116 peuvent être reliés aux chambres 110, 112 au niveau de leur face supérieure ou inférieure (faces parallèles au plan (X,Y) représenté sur la figure 1), les extrémités des capillaires 114, 116 étant disposées sur ou sous les chambres 110, 112. Dans ce cas, les capillaires 114, 116 et les chambres 110, 112 sont réalisés dans deux couches de matériau distinctes.

La hauteur des capillaires 114, 116 (dimension parallèle à l'axe Z représenté sur la figure 1) est ici inférieure ou égale à environ la moitié de la hauteur des chambres 110, 112. Cette configuration permet d'avoir une fréquence de résonance de la cellule qui soit basse, par exemple comprise entre quelques centaines de Hz et quelques kHz. De plus, cette configuration peut être obtenue lorsque la cellule 106 est formé par l'empilement de deux couches de matériau en réalisant les capillaires 114, 116 dans une partie de l'épaisseur d'une de ces deux couches (par exemple la moitié de l'épaisseur de la couche) et en réalisant les chambres 110, 112 dans une partie de l'épaisseur de chacune de ces deux couches (par exemple la moitié de l'épaisseur de chacune des couches). Toutefois, il est également possible d'avoir en variante des capillaires 114, 116 de hauteur sensiblement égale à celle des chambres 110, 112. Dans ce cas, les deux couches de la cellule 106 peuvent être gravées de manière similaire avec une moitié des capillaires 114, 116 et des chambres 110, 112 réalisée dans chacune de ces deux couches.

La cellule 106 comporte également une première ouverture 118 débouchant dans le capillaire 114 et permettant d'amener le gaz dans les chambres 110 et 112 via ce capillaire 114 et un canal d'entrée relié à cette première ouverture 118. La cavité 106 comporte également une deuxième ouverture 120 débouchant dans le capillaire 116 et permettant d'évacuer le gaz hors des chambres 110 et 112 via ce capillaire 116 et un canal de sortie relié à cette deuxième ouverture 120. Sur la figure 1, les ouvertures 118, 120 sont réalisées sensiblement au niveau du milieu de la longueur (dimension parallèle à l'axe Y représenté sur la figure 1) de ces capillaires 114, 116. En variante, la deuxième ouverture 120 peut être utilisée pour amener le gaz dans les chambres 110 et 112 via le capillaire 116, et la première ouverture 118 peut servir à évacuer le gaz hors des chambres 110 et 112 via le capillaire 114.

La cellule 106 peut être réalisée à partir de différents matériaux tels que du semi-conducteur, par exemple du silicium, du verre, du plastique, de la céramique ou encore du métal comme par exemple de l'aluminium, de l'acier inoxydable, du bronze, etc. L'acier inoxydable est particulièrement avantageux car ce métal est inerte vis-à-vis des gaz susceptible d'être envoyés dans la cellule 106. La réalisation d'une cellule 106 en métal est avantageuse car les parois des chambres 110, 112 peuvent dans ce cas réfléchir la lumière, ce qui permet à cette lumière réfléchie d'interagir de nouveau avec le gaz présent dans la cellule 106, et donc d'améliorer l'amplitude du signal photoacoustique.

Le dispositif 100 comporte également des détecteurs acoustiques 122, 124 tels que des microphones miniaturisés piézorésistifs, par exemple de type poutre résonante, ou des microphones capacitifs de type membrane vibrante, sont également couplés aux chambres 110, 112 afin de réaliser les mesures de pression dans les chambres 110, 112. Chacune des chambres 110, 112 peut être couplée à un ou plusieurs microphones, par exemple jusqu'à huit microphones par chambre. Les détecteurs acoustiques 122, 124 sont disposés dans des emplacements 132, 134 (non visibles sur la figure 1) formés dans la cellule photoacoustique 106 et permettant le couplage acoustique des détecteurs 122, 124 avec les chambres 110, 112 de la cellule 106 ainsi que le maintien mécanique de ces détecteurs 122, 124 sur la cellule 106.

Enfin, le dispositif 100 comporte également des circuits électroniques de traitement des signaux délivrés par les détecteurs acoustiques 122, 124, ces circuits n'étant pas représentés sur la figure 1.

Le dispositif 100 décrit ici est modulaire et comporte une cellule photoacoustique 106 munie du premier logement 108 et des emplacements 132, 134 permettant de coupler de manière amovible, c'est-à-dire non-définitive, le premier circuit photonique 104 et les détecteurs acoustiques 122, 124 avec les chambres 110, 112 de la cellule 106. Les ouvertures 118, 120 permettent également de coupler de manière amovible la cellule 106 avec les canaux d'entrée et de sortie de gaz distincts de la cellule 106.

En variante, seul le premier circuit photonique 104 peut être couplé de manière amovible à la cellule 106.

Le principe de fonctionnement du dispositif 100 est similaire à celui décrit dans le document EP 2 515 096 A1 et n'est donc pas décrit en détail ici.

La cellule 106 est ici fixée sur un bâti, par exemple en métal tel que de l'aluminium ou du laiton, qui est mécaniquement et thermiquement découplé de la source lumineuse 102, ce qui permet de gérer thermiquement la cellule 106 indépendamment de la source lumineuse 102. La source lumineuse 102 peut donc fonctionner à une température bien précise qui peut être différente de celle du gaz à étudier se trouvant dans la cellule 106. Un premier système de refroidissement Peltier (également appelé contrôleur Peltier ou module Peltier), ou un système de refroidissement à eau peut être associé à la source lumineuse 102 pour réguler la température de fonctionnement de la source lumineuse 102, tandis qu'un deuxième système de refroidissement, par exemple un deuxième module Peltier ou un deuxième circuit de refroidissement à eau, peut réguler la température de la cellule 106 où le gaz à analyser est présent. Le dispositif 100 est hétérogène du fait que la cellule 106 et la source lumineuse 102 n'ont pas la même conductivité thermique. Cette configuration permet d'avoir une bonne gestion de la thermique du dispositif 100.

On décrit maintenant en liaison avec les figures 2A à 5 les étapes de réalisation de la cellule photoacoustique 106 selon un premier exemple de réalisation.

Dans ce premier exemple de réalisation, la cellule 106 est formée par l'assemblage de deux couches métalliques 126, 128 dans lesquelles sont gravés, par exemple par gravure chimique, les éléments de la cellule 106. Les couches métalliques 126, 128 ont ici chacune une épaisseur égale à environ 1,5 mm et sont par exemple en acier inoxydable.

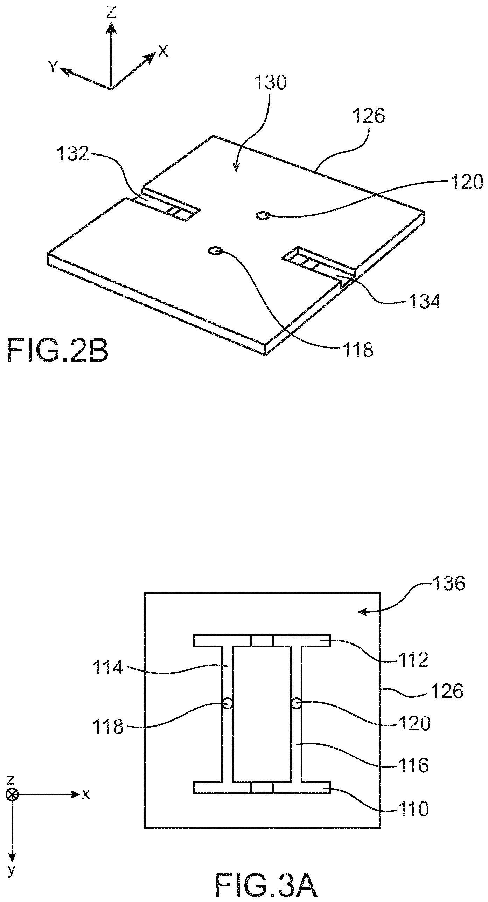

La figure 2A représente une vue de dessus de la première couche 126 sur laquelle une face supérieure 130 de la première couche 126 est visible. La figure 2B représente une vue en perspective de la première couche 126 sur laquelle la face supérieure 130 est visible.

Les ouvertures 118, 120 sont gravées à travers la face supérieure 130 dans une partie de l'épaisseur de la première couche 126, ici égale à environ la moitié de l'épaisseur de la première couche 126, c'est-à-dire égale à environ 0,75 mm. Les diamètres des ouvertures 118, 120 sont égaux l'un par rapport à l'autre et sont égaux à la largeur (dimension parallèle à l'axe X) des capillaires 114, 116. Les emplacements 132, 134 destinés à recevoir les détecteurs acoustiques 122, 124 sont également gravés à travers la face supérieure 130 dans une partie de l'épaisseur de la première couche 126, correspondant ici également à environ la moitié de l'épaisseur de la première couche 126. Ces emplacements 132, 134 forment des rainures dans lesquelles les détecteurs acoustiques 122, 124 seront disposés en butée au fond de ces rainures.

Des trous de fixation destinés au serrage des couches 126, 128 entre elles et à assurer l'étanchéité de la cellule 106 sont également gravés à travers toute l'épaisseur de la première couche 126. Neuf trous de fixation, non visibles sur les figures 2A et 2B, sont par exemple réalisés, cinq de ces trous étant destinés au serrage des couches 126, 128 l'une contre l'autre et quatre autres trous étant destinés au maintien, au dessus de la cellule 106, d'un dispositif d'alimentation en gaz de la cellule 106.

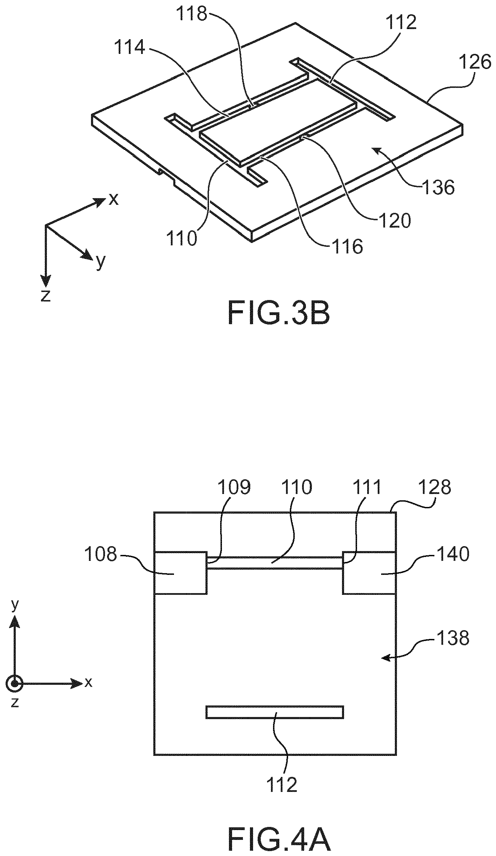

La figure 3A représente une vue de dessous de la première couche 126 sur laquelle une face inférieure 136 de la première couche 126 est visible. La figure 3B représente une vue en perspective de la première couche 126 sur laquelle la face inférieure 136 est visible.

Une première partie des chambres 110, 112 et les capillaires 114, 116 sont gravés sous la forme de tranchées à travers la face inférieure 136 dans une partie de l'épaisseur de la première couche 126, ici égale à environ la moitié de l'épaisseur de la première couche 126, c'est-à-dire égale à environ 0,75 mm. Les trous de fixation (non visibles sur les figures 3A et 3B) réalisés à travers la première couche 126 sont donc également présents au niveau de la face inférieure 136.

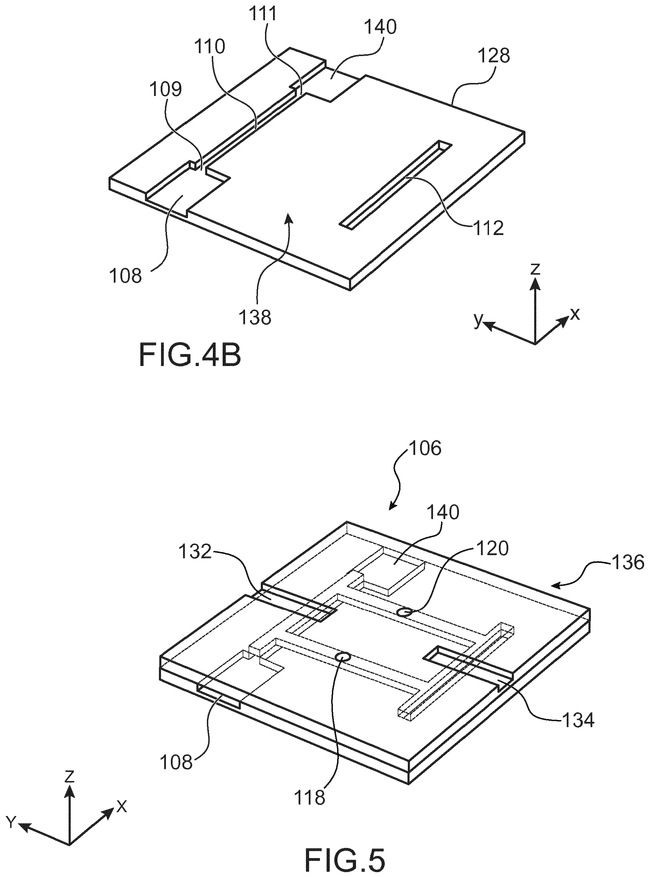

La figure 4A représente une vue de dessus de la deuxième couche 128 sur laquelle une face supérieure 138 de la deuxième couche 128, destinée à être disposée contre la face inférieure 136 de la première couche 126, est visible. La figure 4B représente une vue en perspective de la deuxième couche 128 sur laquelle la face supérieure 138 est visible.

Des tranchées destinées à former une deuxième partie des chambres 110, 112 sont gravées à travers la face supérieure 138 dans une partie de l'épaisseur de la deuxième couche 128, ici égale à environ la moitié de l'épaisseur de la deuxième couche 128, c'est-à-dire égale à environ 0,75 mm. Le premier logement 108 dans lequel le premier circuit photonique 104 est destiné à être inséré est également gravé à travers la face supérieure 138 dans une partie de l'épaisseur de la deuxième couche 128, ici égale à environ la moitié de l'épaisseur de la deuxième couche 128, c'est-à-dire égale à environ 0,75 mm. Les dimensions du premier logement 108 sont adaptées à celles du premier circuit photonique 104 qui est destiné à être couplé optiquement à la cellule 106. Des trous de fixation (non visibles sur les figures 4A et 4B) sont également réalisés à travers la deuxième couche 128. Le nombre, les dimensions et le positionnement de ces trous correspondent à ceux formés à travers la première couche 126. Un deuxième logement 140 est également gravé à travers la face supérieure 138 dans une partie de l'épaisseur de la deuxième couche 128, ici égale à environ la moitié de l'épaisseur de la deuxième couche 128, c'est-à-dire égale à environ 0,75 mm. Ce deuxième logement 140 a ici des dimensions similaires à celles du premier logement 108. Ce deuxième logement 140 est destiné à recevoir un deuxième circuit photonique 146 qui sera couplé optiquement à une face de sortie 111 de la première chambre 110 (opposée à la face d'entrée 109 destinée à recevoir le faisceau lumineux issu du premier circuit photonique 104) et permettra de collecter le signal lumineux de sortie ayant traversé la première chambre 110 afin de pouvoir par exemple vérifier l'alignement et la puissance du faisceau lumineux émis par la source 102. Ce deuxième logement 140 est toutefois facultatif car le dispositif 100 peut ne pas comporter ce deuxième circuit photonique 146.

Les deux couches 126, 128 sont ensuite scellées entre elles pour former la cellule 106, représentée sur la figure 5. L'empilement, ou l'assemblage, obtenu comporte donc, sur la face supérieure 130 de la première couche 126, les emplacements 132, 134 destinés aux détecteurs acoustiques 122, 124 et les ouvertures 118, 120 pour l'entrée et la sortie du gaz de la cellule 106. Les logements 108, 140 sont accessibles depuis des faces latérales de la cellule 106.

Les dimensions des éléments de la cellule 106 sont par exemple :
- chambres 110, 112 : longueur (dimension selon l'axe X) égale à environ 20 mm, largeur (dimension selon l'axe Y) égale à environ 1,5 mm, et hauteur (dimension selon l'axe Z) égale à environ 1,5 mm ;
- capillaires 114, 116: longueur (dimension selon l'axe X) égale à environ 20 mm, largeur (dimension selon l'axe Y) égale à environ 1,5 mm, et hauteur (dimension selon l'axe Z) égale à environ 0,75 mm ;
- espacement entre les capillaires 114, 116 (dimension parallèle à l'axe X) égal à environ 10 mm ;
- hauteur (dimension selon l'axe Z) des logements 108, 140 égale à environ 0,75 mm.

Le volume total de la cellule 106 est égal à environ 135 mm³.

Selon une variante de réalisation, le dispositif 100 peut comporter des chambres 110, 112 ne présentant pas des dimensions similaires. En effet, étant donné que le dispositif 100 est un dispositif miniaturisé, il peut apparaître une opposition de phases entre les signaux de pression mesurés dans les deux chambres 110 et 112 qui soit imparfaite lorsque les dimensions des chambres 110 et 112 sont identiques. La soustraction de ces deux signaux qui est réalisée pour obtenir la mesure souhaitée n'est alors pas optimale. Afin d'améliorer cette opposition de phases, il est possible que les largeurs et/ou les longueurs des chambres 110 et 112 soit différentes l'une par rapport à l'autre. Une optimisation par simulation (par exemple en résolvant l'équation du champ de pression dans le dispositif 100, avec des chambres 110, 112 de tailles différentes), par exemple via un calcul par la méthode des éléments finis, conduit au rapport optimal des dimensions des chambres 110, 112.

Cette homogénéité de la pression dans les chambres 110, 112 permet également de coupler un plus grand nombre de détecteurs acoustiques par chambre et ainsi avoir un meilleur rapport signal sur bruit.

Pour diminuer la différence de pression dans les chambres 110, 112, il est également possible de modifier l'écartement des capillaires 114, 116 entre eux. Il est ainsi avantageux que les capillaires 114, 116 soient espacés l'un de l'autre d'une distance égale à environ la moitié de la longueur des chambres 110, 112 (ce qui correspond, pour l'exemple précédemment décrit, à un espacement de 10 mm entre les capillaires 114, 116 pour des chambres 110, 112 chacune de longueur égale à 20 mm). De ce fait, l'inhomogénéité de pression dans les chambres 110, 112 diminue, et il est possible d'augmenter le nombre de détecteurs acoustiques couplés aux chambres 110, 112, ce qui permet d'améliorer le rapport signal/bruit du dispositif 100.

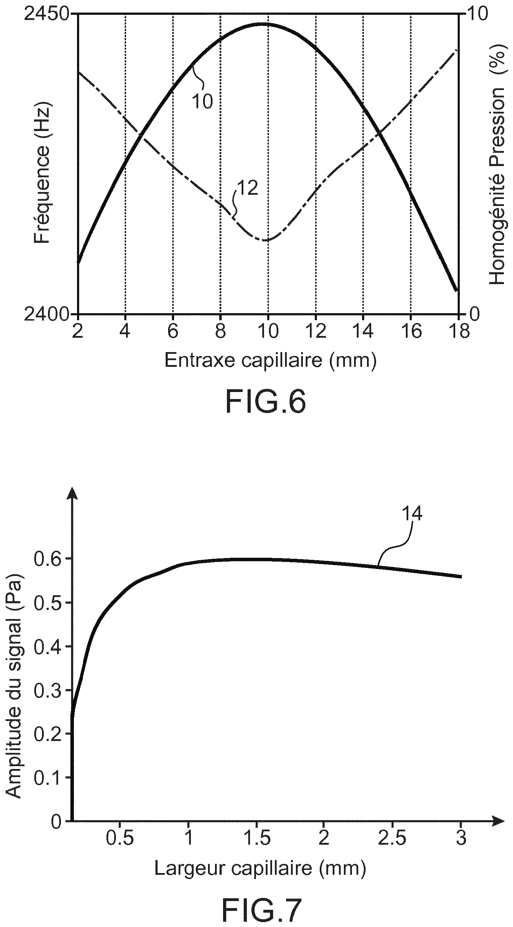

La courbe 10 visible sur la figure 6 représente la valeur de la fréquence de résonance obtenue dans la cellule 106 en fonction de la valeur de l'espacement entre les capillaires 114, 116, et la courbe 12 représente l'homogénéité de pression (le pourcentage de différence entre la valeur minimum et la valeur maximum de pression dans les chambres 110, 112) en fonction de la valeur de l'espacement entre les capillaires 114, 116. Ces données sont obtenues pour des chambres 110, 112 de longueur égale à 20 mm, de largeur égale à 1,5 mm et hauteur égale à 1,5 mm, et pour des capillaires 114, 116 de longueur égale à 20 mm, de largeur égale à 0,8 mm et hauteur égale à environ 1,5 mm, et dans le cas où les capillaires 114, 116 débouchent dans les chambres 110, 112 à des niveaux correspondant à environ ¼ et ¾ de leur longueur. La courbe 12 montre bien que la meilleure homogénéité est obtenue lorsque les capillaires 114, 116 sont espacés d'une distance égale à la moitié de la longueur des chambres 110, 112, soit 10 mm dans le cas présent.

La courbe 14 visible sur la figure 7 représente la valeur de l'amplitude du signal acoustique obtenue dans les chambres 110, 112 de la cellule 106, lorsque l'espacement entre les capillaires 114, 116 est égal à la moitié de la longueur des chambres 110, 112, et en faisant varier la largeur (dimension selon l'axe X pour l'exemple représenté sur la figure 1) des capillaires 114, 116 dans le but de trouver le signal optimum pouvant être délivré par les détecteurs acoustiques 122, 124. Cette courbe montre que la valeur maximale du signal obtenu dans la cellule 106 est obtenue lorsque la largeur des capillaires 114, 116 est égale à environ 1,5 mm.

Dans l'exemple de la figure 1 précédemment décrit, les ouvertures 118, 120 débouchent sensiblement au niveau du milieu de la longueur des capillaires 114, 116. En variante, ces ouvertures 118, 120 peuvent être formées à un autre niveau que le milieu de la longueur des capillaires 114, 116, et cela sans perturber la symétrie de l'écoulement du gaz dans le dispositif 100 si les entrée et sortie de gaz sont suffisamment étroites.

Pour augmenter l'intensité du signal mesuré par les détecteurs acoustiques 122, 124 du dispositif 100, il est possible de réaliser les capillaires 114, 116 tels qu'ils soient disposés aux extrémités des chambres 110, 112. Une telle configuration permet d'augmenter d'environ 5 % l'amplitude du signal mesuré par les détecteurs acoustiques. Cependant, cette augmentation de l'amplitude du signal se fait au détriment de l'homogénéité de pression qui, elle, diminue, tout en restant bonne.

Les différentes options de réalisation décrites dans le document EP 2 515 096 A1, comme par exemple l'utilisation d'un refroidisseur à effet Peltier, d'un amplificateur intégré au dispositif, ou les différents exemples de matériaux décrits, peuvent s'appliquer au dispositif de détection photoacoustique modulaire décrit ici.

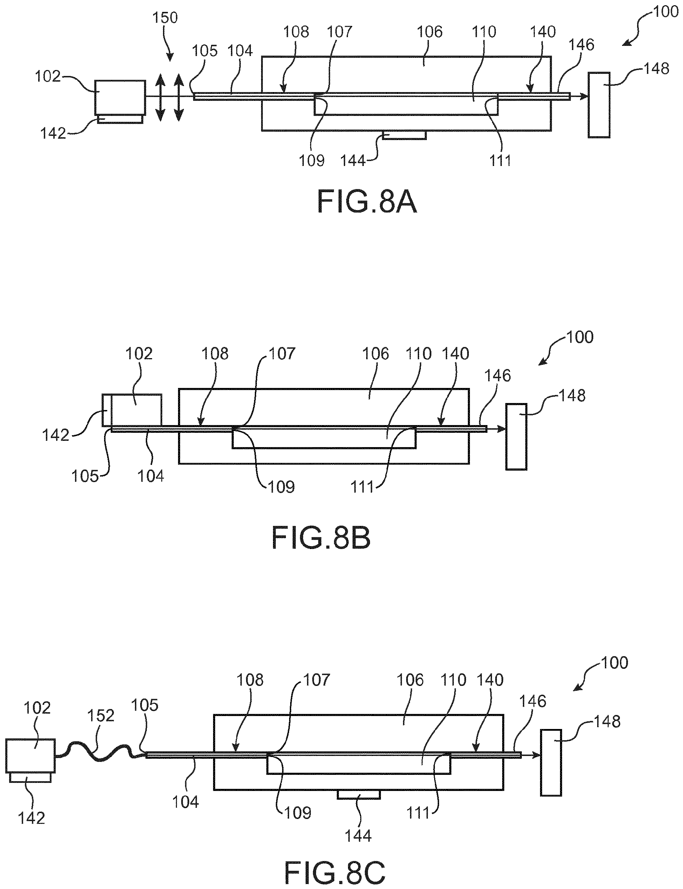

Les figures 8A à 8C représentent schématiquement le dispositif 100 selon différentes configurations, présentant différents couplages possibles entre la source lumineuse 102 et le premier circuit photonique 104.

Sur ces trois figures, le dispositif 100 comporte un premier système de refroidissement Peltier 142 associé à la source lumineuse 102 permettant de gérer thermiquement la source lumineuse 102 indépendamment des autres éléments du dispositif 100. Le dispositif 100 comporte également, dans les configurations représentées sur les figures 8A et 8C, un deuxième système de refroidissement Peltier 144 associé à un bâti (non visible sur les figures 8A et 8C) sur lequel est disposée la cellule 106 et permettant de gérer thermiquement la cellule 106 indépendamment des autres éléments du dispositif 100, notamment indépendamment de la source lumineuse 102 et permettant de faire travailler la cellule 106 à une température différente de celle de la source lumineuse 102.

En outre, sur ces trois figures, le dispositif 100 comporte un deuxième circuit photonique 146, par exemple en silicium, couplé optiquement à la face de sortie 111 de la première chambre 110 (opposée à la face d'entrée 109 destinée à recevoir le faisceau lumineux issu du circuit photonique 104) et permettant de collecter le signal lumineux de sortie ayant traversé la première chambre 110 afin de pouvoir par exemple vérifier l'alignement et la puissance du faisceau lumineux émis par la source 102. Une partie du deuxième circuit photonique 146 est insérée dans le deuxième logement 140 formé dans la cellule 106 tel que la face de sortie 111 de la première chambre 110 soit directement couplée à ce deuxième circuit photonique 146. Enfin, le dispositif 100 comporte un détecteur optique 148 destiné à recevoir le signal issu du deuxième circuit photonique 146.

Dans le premier exemple représenté sur la figure 8A, la source lumineuse 102 correspond à une source laser n'émettant qu'une seule longueur d'onde, par exemple dans le MIR, dont le faisceau est envoyé dans un système de collimation 150 comprenant au moins une voire deux lentilles et permettant d'avoir en sortie un faisceau lumineux collimaté sur plusieurs centimètre. En effet, un laser QCL émet un faisceau laser divergent à sa sortie. Le système de collimation 150 permet de collimater ce faisceau et de réduire sa taille.

En arrivant dans le système 150, le faisceau est collimaté avec une première lentille de focale *f* correctement positionnée. Si la source laser 102 est ponctuelle, il suffit de placer la sortie de la source laser 102 à la distance focale de cette première lentille, ce qui permet d'avoir un faisceau parallèle en sortie de la première lentille. Si la source 102 n'est pas ponctuelle, il faut tenir compte dans ce cas de sa forme. Soit *y*1 le rayon du faisceau laser et *θ*1 l'angle de divergence du faisceau en sortie de la source 102. La collimation de la lumière de cette source 102 par une première lentille de distance focale *f* produit un faisceau de rayon y2 = *θ*1 * *f* et un angle de divergence *θ*2 = y1/*f*. Quelle que soit la lentille, le rayon et la divergence du faisceau dépendent l'un de l'autre. Par exemple, pour améliorer la collimation d'un facteur deux (en diminuant l'angle de moitié), il faut multiplier le diamètre du faisceau par deux.

Afin de diminuer la taille du faisceau collimaté, un groupe de deux lentilles est utilisé dans le système 150. Si ces deux lentilles sont convergentes de focales respectives *f*1 et *f*2, et que l'on souhaite réduire le faisceau laser, les lentilles sont choisies telles que *f*2 < *f*1. Le grandissement transversal obtenu est donné par la formule *G=f*2/*f*1*.*

Il est également possible de ne positionner qu'une seule lentille, avec dans ce cas le laser placé à la focale de la lentille afin d'avoir un faisceau en sortie de la lentille qui soit collimaté.

Il est également possible d'effectuer la collimation et la réduction du faisceau à l'aide de deux lentilles comme on peut le faire avec un montage de type télescope, c'est-à-dire un système afocal formé de deux lentilles où le foyer image de la première lentille coïncide avec le foyer objet de la seconde lentille, permettant de créer un réducteur de faisceau.

Pour assurer un bon couplage entre le premier circuit photonique 104 et l'ensemble comprenant la source 102 et le système 150, il est possible de placer cet ensemble sur un support pouvant contrôler les translations et rotations de l'ensemble selon 3, 5 ou 6 axes, permettant ainsi d'obtenir un bon positionnement de cet ensemble par rapport au premier circuit photonique 104 (qui est placé dans le premier logement 108 et qui, de ce fait, est correctement positionné linéairement en face de la première chambre 110 de la cellule 106).

Le système de collimation 150 est interposé entre la source lumineuse 102 et la face d'entrée 105 du premier circuit photonique 104 qui correspond, dans ce premier exemple, à un guide d'onde adapté à la longueur d'onde du faisceau émis par la source 102 et qui permet de guider le faisceau dans la première chambre 110. A la sortie de la première chambre 110, le faisceau lumineux est toujours collimaté et ressort de la première chambre 110 par le deuxième circuit photonique 146 formant un guide d'onde ou une fenêtre transparente vis-à-vis de la longueur d'onde du faisceau.

Dans ce premier exemple, la source lumineuse 102 n'est pas en contact direct, ou collé, au premier circuit photonique 104 qui lui est monté de manière amovible dans le premier logement 108 de la cellule 106. Le premier système de refroidissement 142 est disposé sous la source lumineuse 102.

Dans le deuxième exemple représenté sur la figure 8B, la source lumineuse 102 correspond à une barrette de plusieurs sources lasers ou une seule source laser. La source 102 est ici en contact direct avec le premier circuit photonique 104 qui correspond à un circuit multiplexeur/démultiplexeur de type AWG (« Arrayed Waveguide Grating » en anglais), ou multiplexeur/démultiplexeur à réseau de guides d'onde, par exemple réalisé en Ge ou en SiGe. Le couplage optique entre la source 102 et le premier circuit photonique 104 est par exemple obtenu via un couplage direct par la tranche du premier circuit photonique 104. La source 102 est ici solidaire du premier circuit photonique 104. La longueur du premier circuit photonique 104 est supérieure à celle du premier logement 108 pour que seule une partie du premier circuit photonique 104 soit insérée dans le premier logement 108 et que la source lumineuse 102 soit située à l'extérieur de la cellule 106 (cela est également le cas dans les autres exemples décrits).

Un exemple de positionnement de la source 102 sur le premier circuit photonique 104 est décrit ci-dessous. Lorsque la source 102 correspond à une barrette de lasers, les sorties de la barrette sont positionnées en face des entrées du premier circuit photonique 104 à l'aide d'une loupe binoculaire. La barrette de lasers est placée sur un support contrôlant les translations et rotations de la barrette selon 3, 5 ou 6 axes afin d'effectuer un positionnement préliminaire de la barrette vis-à-vis du premier circuit photonique 104. Une caméra visualisant les rayonnements MIR en sortie du premier circuit photonique 104 est ensuite utilisée pour régler de manière plus minutieuse le positionnement de la barrette de lasers en jouant sur les axes du support. Le réglage optimal est obtenu lorsque la caméra voit un éclairement conséquent en sortie du premier circuit photonique 104.

Cette deuxième configuration permet de privilégier le contrôle en température de la source lumineuse 102, notamment lorsque la source 102 correspond à une barrette de plusieurs lasers. En effet, du fait que la longueur d'onde émise par chaque laser varie avec la température de fonctionnement de ces lasers, il est donc nécessaire de contrôler la température de la barrette de lasers. Etant donné que la source 102 est en contact avec le premier circuit photonique 104 et que celui-ci est également en contact direct avec la cellule photoacoustique 106, il n'est pas possible de contrôler en température indépendamment la source 102 vis-à-vis de la cellule 106. Si la cellule 106 travaille à une température différente de celle de la source 102, le contrôle de la température de la cellule 106 va influer sur la température de la source 102. Une gestion en température de la source 102 est donc privilégiée en associant un système de refroidissement seulement à la source 102 pour assurer le bon fonctionnement de cette dernière.

Dans le troisième exemple représenté sur la figure 8C, le couplage optique entre la source lumineuse 102, ici de type laser, et la face d'entrée 105 du premier circuit photonique 104 est réalisé par une fibre optique 152. L'utilisation d'une telle fibre optique 152 permet une maîtrise aisée du faisceau lumineux, notamment concernant sa direction. Ce troisième exemple est par exemple avantageux lorsque la source lumineuse 102 est distante et/ou non alignée avec la cellule photoacoustique 106.

Lorsque la source 102 correspond à un seul laser, la sortie de laser peut être reliée à la fibre optique 152. Cette fibre 152 est placée en face du laser à l'aide d'un support dont le but est d'assurer un couplage optimal entre le laser et la fibre 152. Ce support peut correspondre à une petite platine qui est ensuite fixé au laser lorsque le réglage est optimal. Une fois ce premier couplage effectué, un couplage similaire est effectué entre l'autre côté de la fibre 152 et l'entrée du premier circuit photonique 104 de type AWG correspondante à la longueur d'onde du faisceau émis par le laser 102. Un support peut également être utilisé pour aligner le premier circuit photonique 104 avec la fibre 152. Une fois ces réglages effectués, le premier circuit photonique 104 est disposé dans le premier logement 108 en face de la première chambre 110. La lumière rentre donc dans la cellule 106 avec une certaine divergence. Cela n'empêche pas l'interaction entre le laser et les molécules de gaz à détecter.

Il est possible d'utiliser des « tapers », ou raccords progressifs, en entrée du premier circuit photonique 104 afin de facilité le couplage entre la fibre 152 et le laser. Dans le cas de l'optique guidé, un tel taper permet de raccorder deux guides de même épaisseur mais de section différente par exemple par un prisme à base trapézoïdale.

Le premier circuit photonique 104 peut comporter une extrémité (au niveau de la face d'entrée 105) en forme de pointe, c'est-à-dire de largeur inférieure à celle du reste du circuit photonique 104. Une telle extrémité en forme de pointe permet de rendre moins divergent le faisceau lumineux obtenu notamment en sortie de la fibre optique 152, et est avantageuse lorsqu'il n'est pas nécessaire de collimater le faisceau lumineux en entrée du premier circuit photonique 104.

Dans le premier exemple de réalisation de la cellule photoacoustique 106 précédemment décrit en liaison avec les figures 2A à 5, la cellule 106 est réalisée à partir de deux couches métalliques 126, 128 dans lesquelles sont gravés les éléments de la cellule 106. Les emplacements 132, 134, les logements 108, 140, les chambres 110, 112 et les capillaires 114, 116 sont gravés dans une partie de l'épaisseur des couches métalliques 126, 128.

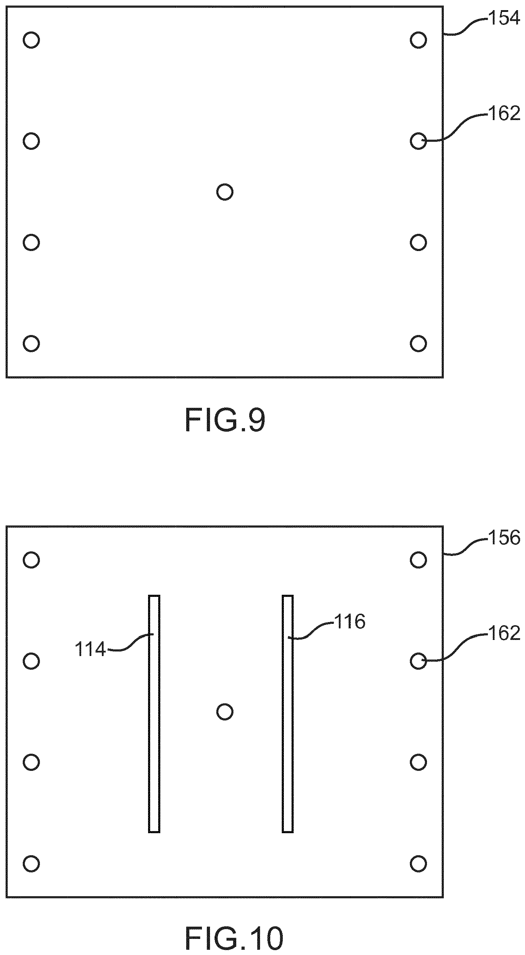

En variante, il est possible de mettre en œuvre des étapes de gravure à travers toute l'épaisseur des couches de matériau utilisées pour former la cellule 106. Cela implique de faire appel à plus de deux couches de matériau pour réaliser la cellule 106. Un tel deuxième exemple de réalisation de la cellule 106 est décrit ci-dessous en liaison avec les figures 9 à 12.

Dans ce deuxième exemple de réalisation, la cellule photoacoustique 106 est réalisée par un assemblage de quatre couches de matériau, ici quatre couches métalliques référencées 154, 156, 158 et 160, dans lesquelles les différents éléments de la cellule 106 sont formés par gravure laser. Toutes les gravures réalisées dans chacune de ces couches 154 à 160 traversent toute l'épaisseur de cette couche. En variante de la gravure laser, il est possible qu'une gravure chimique soit mise en œuvre à travers toute l'épaisseur de ces couches.

La première couche 154 est représentée sur la figure 9. Cette première couche 154 est destinée à former le capot supérieur de la cellule 106 et assure la fermeture des faces supérieures des capillaires 114, 116. Neuf trous de fixation 162 sont gravés à travers toute l'épaisseur de la première couche 154, cette épaisseur étant par exemple égale à environ 0,5 mm.

La deuxième couche 156 est représentée sur la figure 10. Cette deuxième couche 156 est traversée par deux ouvertures longilignes formant les capillaires 114, 116. Elle est également traversée par les trous de fixation 162. Lorsque la première couche 154 est disposée sur la deuxième couche 156, les capillaires 114, 116 sont donc fermés, au niveau de la face de la deuxième couche 156 qui est en contact avec la première couche 154, par la première couche 154. L'épaisseur de la deuxième couche 156 est par exemple égale à environ 0,5 mm.

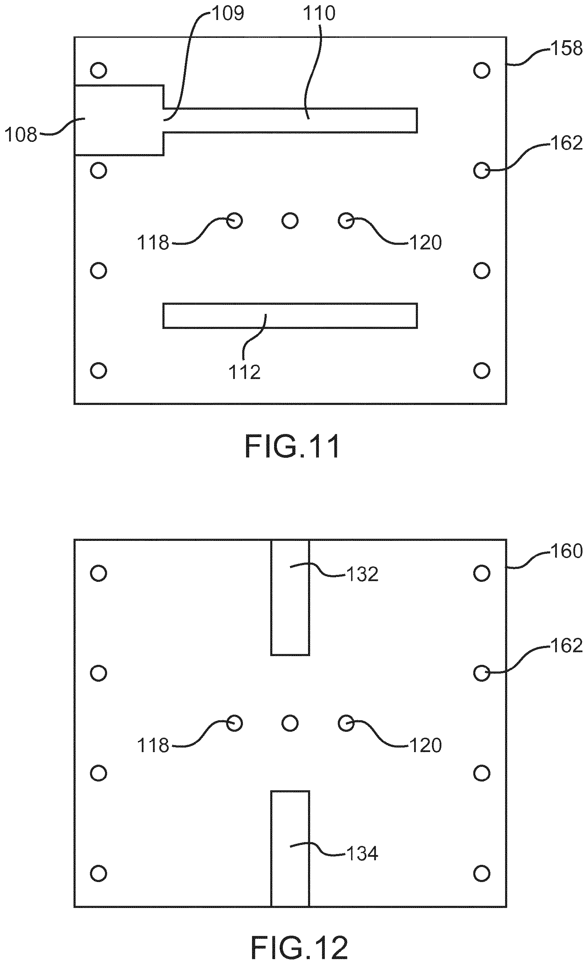

La troisième couche 158 est représentée sur la figure 11. Cette troisième couche 158 est traversée par deux ouvertures longilignes formant les chambres 110, 112. Elle est également traversée par une autre ouverture destinée à former le premier logement 108 dans lequel le premier circuit photonique 104 sera inséré (dans cet exemple, la cellule 106 ne comporte pas le deuxième logement 140). Deux autres trous sont formés à travers la troisième couche 158 pour former les ouvertures 118, 120 servant à l'amenée et à l'évacuation du gaz dans la cellule 106. Enfin, les trous de fixation 162 sont également réalisés à travers cette troisième couche 158. L'épaisseur de cette troisième couche 158 est de l'ordre de l'épaisseur du premier circuit photonique 104, avantageusement environ 0,72 mm, c'est-à-dire l'épaisseur typique d'un substrat de silicium. La troisième couche 158 est disposée contre la face de la deuxième couche 156 opposée à celle disposée contre la première couche 154, c'est-à-dire telle que la deuxième couche 156 soit disposée entre la première couche 154 et la troisième couche 158. En positionnant ainsi la troisième couche 158 contre la deuxième couche 156, les ouvertures 118, 120 d'entrée et de sortie de gaz sont positionnées juste au-dessus des capillaires 114, 116. Cette troisième couche 158 permet également de fermer les capillaires 114, 116 au niveau de la face de la deuxième couche 156 qui est en contact avec la troisième couche 158. De plus, les chambres 110, 112 et le premier logement 108 sont fermés, au niveau de la face de la troisième couche 158 qui est en contact avec la deuxième couche 156, par la deuxième couche 156. Enfin, lorsque la troisième couche 158 est ainsi disposée contre la deuxième couche 156, chacun des capillaires 114, 116 communique avec les chambres 110, 112.

La quatrième couche 160 est représentée sur la figure 12. Cette couche 160 est traversée par les ouvertures 118, 120, par les trous de fixation 162, ainsi que par deux autres ouvertures destinées à former les emplacements 132, 134 pour les détecteurs acoustiques 122, 124. Cette quatrième couche 160 ferme les chambres 110, 112 et le premier logement 108 au niveau de la face de la troisième couche 158 qui est en contact avec cette quatrième couche 160. L'épaisseur de la quatrième couche 160 est par exemple égale à environ 0,5 mm.

Pour la réalisation de la cellule photoacoustique 106, les quatre couches 154, 156, 158 et 160 sont assemblées les unes contre les autres comme décrit ci-dessus, puis fixées par exemple par quatre vis disposées dans les trous de fixation 162 se situant aux coins de l'empilement de couches. Une vis centrale peut être disposée dans le trou de fixation 162 se trouvant au centre de la cellule 106, permettant de solidariser la cellule 106 à un bâti. Une pièce mécanique supplémentaire comportant des canaux d'entrée et de sortie de gaz permettant l'arrivée et la sortie du gaz à analyser dans la cellule 106, est par exemple disposée sur la cellule 106. Des joints toriques sont disposés entre la quatrième couche 160 de la cellule 106 et cette pièce supplémentaire. L'ensemble est alors serré par quatre autres vis au bâti via les quatre trous de fixation 162 restants, ce qui assure d'autant plus un maintien de la cellule 106 au bâti.

Dans ce deuxième exemple de réalisation de la cellule photoacoustique 106, les dimensions des chambres 110, 112 sont par exemple égales à environ 20 mm (longueur) * 0,75 mm (largeur) * 0,72 mm (hauteur), et les dimensions des capillaires 114, 116 sont par exemple égales à environ 20 mm (longueur) * 0,5 mm (largeur) * 0,5 mm (hauteur). Les ouvertures 118, 120 ont par exemple chacune un diamètre égal à environ 0,3 mm. Enfin, les dimensions du logement 108 sont par exemple égales à environ 6 mm (largeur) * 7,5 mm (longueur) * 0,72 mm (hauteur).

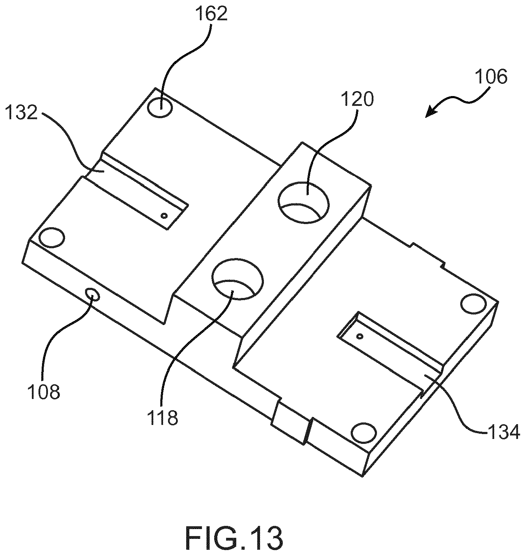

Selon un troisième exemple de réalisation de la cellule photoacoustique 106, celle-ci peut être réalisée par impression 3D en utilisant des poudres métalliques fusionnées à partir d'un laser CO₂, également appelée DMLS pour « Direct Metal Laser Sintering », ou frittage de poudres métalliques. La figure 13 représente schématiquement une cellule photoacoustique 106 réalisée par un tel procédé. Ce procédé permet de réaliser la cellule 106 avec une précision optimale grâce à la réalisation de couches d'épaisseur égale à environ 0,02 mm et avec une très bonne résolution des détails ainsi que d'excellentes propriétés mécaniques. Une telle technique peut être mise en œuvre avec différents métaux tels que de l'acier inoxydable, un alliage de chrome et de cobalt, de l'aluminium, du titane ou des super-alliages tels que ceux commercialisés sous la marque Incolnel®. La cellule photoacoustique 106 obtenue avec ce procédé correspond à une pièce monolithique.

## Revendications

1. Dispositif (100) de détection photoacoustique modulaire comportant au moins :
- une cellule photoacoustique (106) comprenant au moins deux chambres (110, 112) reliées par au moins deux capillaires (114, 116) et formant un résonateur acoustique différentiel de type Helmholtz ;
- des détecteurs acoustiques (122, 124) couplés aux chambres (110, 112) ;
- une source lumineuse (102) apte à émettre un faisceau lumineux ayant au moins une longueur d'onde apte à exciter un gaz destiné à être détecté et modulable à une fréquence de résonance de la cellule photoacoustique (106) ; et
- un premier circuit photonique (104) couplant optiquement la source lumineuse (102) à une face d'entrée (109) d'une première des chambres (110) ;
**caractérisé en ce que**
le dispositif (100) de détection comprend un premier logement (108) qui est formé dans la cellule acoustique (106) et qui débouche sur la face d'entrée (109) de la première chambre (110),
et **en ce que** le premier circuit photonique (104) est disposé de manière amovible dans ledit premier logement (108).

2. Dispositif (100) selon la revendication 1, dans lequel les détecteurs acoustiques (122, 124) sont couplés de manière amovible à la cellule photoacoustique (106).

3. Dispositif (100) selon l'une des revendications précédentes, dans lequel la cellule photoacoustique (106) comporte au moins un empilement d'une première et d'une deuxième couches (126, 128) de matériau dans lesquelles sont formés les chambres (110, 112), les capillaires (114, 116), le premier logement (108), au moins deux ouvertures (118, 120) débouchant chacune dans l'un des capillaires (114, 116) et au moins deux emplacements (132, 134) communiquant chacun avec l'une des chambres (110, 112) et dans lesquels les détecteurs acoustiques (122, 124) sont disposés.

4. Dispositif (100) selon la revendication 3, dans lequel :
- les emplacements (132, 134) sont formés dans une partie de l'épaisseur de la première couche (126) et traversent une face supérieure (130) de la première couche (126) ;
- les ouvertures (118, 120) traversent toute l'épaisseur de la première couche(126) ;
- une première partie de chacune des chambres (110, 112) est formée dans une partie de l'épaisseur de la première couche (126) et traverse une face inférieure (136) de la première couche (126) opposée à la face supérieure (130) de la première couche(126) ;
- les capillaires (114, 116) sont formés dans une partie de l'épaisseur de la première couche (126) et traversent la face inférieure (136) de la première couche (126) ;
- une deuxième partie de chacune des chambres (110, 112) est formée dans une partie de l'épaisseur de la deuxième couche (128) et traverse une face supérieure (138) de la deuxième couche (128) qui est disposée contre la face inférieure (136) de la première couche (126), les première et deuxième parties de chacune des chambres (110, 112) étant disposées en regard l'une de l'autre ;
- le premier logement (108) est formé dans une partie de l'épaisseur de la deuxième couche (128) et traverse la face supérieure (138) de la deuxième couche (128).

5. Dispositif (100) selon l'une des revendications 1 ou 2, dans lequel la cellule photoacoustique (106) comporte au moins un empilement d'une première, deuxième, troisième et quatrième couches (154, 156, 158, 160) de matériau dans lesquelles sont formés les chambres (110, 112), les capillaires (114, 116), le premier logement (108), au moins deux ouvertures (118, 120) débouchant chacune dans l'un des capillaires (114, 116) et au moins deux emplacements (132, 134) communiquant chacun avec l'une des chambres (110, 112) et dans lesquels les détecteurs acoustiques (122, 124) sont disposés.

6. Dispositif (100) selon la revendication 5, dans lequel :
- les capillaires (114, 116) traversent toute l'épaisseur de la deuxième couche (156), les première et troisième couches (154, 158) entre lesquelles se trouve la deuxième couche (156) formant des parois supérieure et inférieure des deux capillaires (114, 116) ;
- les chambres (110, 112) et le premier logement (108) traversent toute l'épaisseur de la troisième couche (158), les deuxième et quatrième couches (156, 160) entre lesquelles se trouve la troisième couche (158) formant des parois supérieure et inférieure des chambres (110, 112) et du premier logement (108) ;
- les emplacements (132, 134) traversent toute l'épaisseur de la quatrième couche (160) ;
- les ouvertures (118, 120) traversent toute l'épaisseur des troisième et quatrième couches (158, 160).

7. Dispositif (100) selon l'une des revendications 1 ou 2, dans lequel la cellule photoacoustique (106) est formée d'une pièce monolithique de poudres fusionnées.

8. Dispositif (100) selon l'une des revendications précédentes, dans lequel le dispositif (100) comprend au moins un système de collimation (150) comportant au moins une lentille, et dans lequel la source lumineuse (102) est couplée optiquement à une face d'entrée (105) du premier circuit photonique (104) par ledit au moins un système de collimation (150) comportant au moins une lentille, et dans lequel le premier circuit photonique (104) forme au moins un guide d'onde.

9. Dispositif (100) selon l'une des revendications 1 à 7, dans lequel la source lumineuse (102) est apte à émettre un faisceau lumineux ayant plusieurs longueurs d'onde et est disposée contre le premier circuit photonique (104) qui forme un circuit multiplexeur - démultiplexeur à réseau de guides d'onde.

10. Dispositif (100) selon l'une des revendications 1 à 7, dans lequel le dispositif (100) comprend au moins une fibre optique (152), et dans lequel la source lumineuse (102) est couplée optiquement à une face d'entrée (105) du premier circuit photonique (104) par ladite au moins une fibre optique (152), et dans lequel le premier circuit photonique (104) forme au moins un guide d'onde ou un circuit multiplexeur - démultiplexeur à réseau de guides d'onde.

11. Dispositif (100) selon l'une des revendications précédentes, comportant en outre au moins un premier système de refroidissement (142) apte à réguler thermiquement la source lumineuse (102) et, lorsque la source lumineuse (102) n'est pas disposée contre le premier circuit photonique (104), un deuxième système de refroidissement (144) apte à réguler thermiquement la cellule photoacoustique (106) indépendamment de la source lumineuse (102).

12. Dispositif (100) selon l'une des revendications précédentes, dans lequel le dispositif (100) comprend un détecteur optique (148), et dans lequel la cellule photoacoustique (106) comporte en outre au moins un deuxième logement (140) débouchant sur une face de sortie (111) de la première chambre (110), et dans lequel le dispositif (100) comprend en outre au moins un deuxième circuit photonique (146) couplant optiquement la face de sortie (111) de la première chambre (110) à ledit détecteur optique (148), ledit au moins deuxième circuit photonique (149) étant disposé de manière amovible dans le deuxième logement (140).

13. Dispositif (100) selon l'une des revendications précédentes, dans lequel la cellule photoacoustique (106) est formée d'un ou plusieurs métaux.

14. Dispositif (100) selon l'une des revendications précédentes, dans lequel une distance entre les deux capillaires (114, 116) est égale à environ la moitié de la longueur d'au moins une des chambres (110, 112).

15. Dispositif de détection de gaz, comportant au moins un dispositif (100) selon l'une des revendications précédentes et des canaux d'entrée et de sortie de gaz communiquant avec les chambres (110, 112) du dispositif de détection photoacoustique (100), et dans lequel ladite au moins une longueur d'onde du faisceau lumineux apte à être émis par la source lumineuse (102) correspond à au moins une longueur d'onde d'absorption d'au moins un gaz destiné à être détecté.

16. Procédé de réalisation d'un dispositif (100) de détection photoacoustique modulaire, comportant au moins les étapes de :
- réalisation d'au moins une cellule photoacoustique (106) comprenant au moins deux chambres (110, 112) reliées par au moins deux capillaires (114, 116) et formant un résonateur acoustique différentiel de type Helmholtz ;
- couplage de détecteurs acoustiques (122, 124) aux chambres (110, 112) ;
- réalisation d'au moins une source lumineuse (102) apte à émettre un faisceau lumineux ayant au moins une longueur d'onde apte à mettre en résonance la cellule photoacoustique (106) et
- réalisation d'au moins un premier circuit photonique (104) couplant optiquement la source lumineuse (102) à une face d'entrée (109) d'une première des chambres (110) ;
**caractérisé en ce que** le procédé comprend en outre l'étapes de :
- formation d'un premier logement (108) dans la cellule acoustique (106) qui débouche sur la face d'entrée (109) de la première chambre (110) ; et
- disposition dudit au moins un premier circuit photonique (104) de manière amovible dans ledit premier logement (108).

17. Procédé selon la revendication 16, dans lequel :
- la réalisation de la cellule photoacoustique (106) comporte la réalisation d'au moins un empilement d'une première et d'une deuxième couches (126, 128) de matériau dans lesquelles sont formés, par gravure chimique mise en œuvre dans une partie de l'épaisseur de chacune des première et deuxième couches (126, 128), les chambres (110, 112), les capillaires (114, 116), le premier logement (108), au moins deux ouvertures (118, 120) débouchant chacune dans l'un des capillaires (114, 116) et au moins deux emplacements (132, 134) communiquant chacun avec l'une des chambres (110, 112) et dans lesquels les détecteurs acoustiques (122, 124) sont disposés, ou
- la réalisation de la cellule photoacoustique (106) comporte la réalisation d'au moins un empilement d'une première, deuxième, troisième et quatrième couches (154, 156, 158, 160) de matériau dans lesquelles sont formés, par gravure chimique ou laser mise en œuvre dans toute l'épaisseur de chacune des deuxième, troisième et quatrième couches (156, 158, 160), les chambres (110, 112), les capillaires (114, 116), le premier logement (108), au moins deux ouvertures (118, 120) débouchant chacune dans l'un des capillaires (114, 116) et au moins deux emplacements (132, 134) communiquant chacun avec l'une des chambres (110, 112) et dans lesquels les détecteurs acoustiques (122, 124) sont disposés, ou
- la cellule photoacoustique (106) est formée d'une pièce monolithique de poudres métalliques fusionnées obtenue par impression 3D.

## Patentansprüche

1. Modulare fotoakustische Detektionsvorrichtung (100), die wenigstens folgendes umfasst:
- eine fotoakustische Zelle (106), die wenigstens zwei Kammern (110, 112) umfasst, die durch wenigstens zwei Kapillaren (114, 116) verbunden sind und einen differenziellen akustischen Resonator vom Helmholtztyp bilden;
- akustische Detektoren (122, 124), die mit den Kammern (110, 112) gekoppelt sind;
- eine Lichtquelle (102), die dazu ausgelegt ist, einen Lichtstrahl zu emittieren, der wenigstens eine Wellenlänge hat, die dazu ausgelegt ist, ein Gas anzuregen, das detektiert werden soll, und die auf eine Resonanzfrequenz der fotoakustischen Zelle (106) modulierbar ist; und
- eine erste photonische Schaltung (104), die die Lichtquelle (102) optisch mit einer Eingangsfläche (109) einer ersten von den Kammern (110) koppelt;
**dadurch gekennzeichnet, dass**
die Detektionsvorrichtung (100) eine erste Aufnahme (108) umfasst, die in der akustischen Zelle (106) gebildet ist, und die auf die Eingangsfläche (109) der ersten Kammer (110) mündet, und dass die erste photonische Schaltung (104) auf entfernbare Weise in der ersten Aufnahme (108) angeordnet ist.

2. Vorrichtung (100) nach Anspruch 1, bei der die akustischen Detektoren (122, 124) auf entfernbare Weise an die fotoakustische Zelle (106) gekoppelt sind.

3. Vorrichtung (100) nach einem der vorhergehenden Ansprüche, bei der die fotoakustische Zelle (106) wenigstens einen Stapel aus einer ersten und einer zweiten Materialschicht (126, 128) umfasst, in denen die Kammern (110, 112), die Kapillaren (114, 116), die erste Aufnahme (108), wenigstens zwei Öffnungen (118, 120), die jeweils in eine der Kapillaren (114,116) münden, und wenigstens zwei Stellen (132, 134) gebildet sind, die jeweils mit einer der Kammern (110, 112) kommunizieren, und in denen die akustischen Detektoren (122, 124) angeordnet sind.

4. Vorrichtung (100) nach Anspruch 3, bei der:
- die Stellen (132, 134) in einem Teil der Dicke der ersten Schicht (126) gebildet sind und eine obere Fläche (130) der ersten Schicht (126) durchsetzen;
- die Öffnungen (118, 120) die gesamte Dicke der ersten Schicht (126) durchsetzen;
- ein erster Teil von jeder der Kammern (110, 112) in einem Teil der Dicke der ersten Schicht (126) gebildet ist und eine untere Fläche (136) der ersten Schicht (126) entgegengesetzt zur oberen Fläche (130) der ersten Schicht (126) durchsetzt;
- die Kapillaren (114, 116) in einem Teil der Dicke der ersten Schicht (126) gebildet sind und die untere Fläche (136) der ersten Schicht (126) durchsetzen;
- ein zweiter Teil von jeder der Kammern (110, 112) in einem Teil der Dicke der zweiten Schicht (128) gebildet ist und eine obere Fläche (138) der zweiten Schicht (128) durchsetzt, die gegen die untere Fläche (136) der ersten Schicht (126) angeordnet ist, wobei der erste und der zweite Teil von jeder der Kammern (110, 112) einander gegenüberliegend angeordnet sind;
- die erste Aufnahme (108) in einem Teil der Dicke der zweiten Schicht (128) gebildet ist und die obere Fläche (138) der zweiten Schicht (128) durchsetzt.

5. Vorrichtung (100) nach einem der Ansprüche 1 oder 2, bei der die fotoakustische Zelle (106) wenigstens einen Stapel aus einer ersten, einer zweiten, einer dritten und einer vierten Materialschicht (154, 156, 158, 160) umfasst, in denen die Kammern (110, 112), die Kapillaren (114, 116), die erste Aufnahme (108), wenigstens zwei Öffnungen (118, 120), die jeweils in eine der Kapillaren (114, 116) münden, und wenigstens zwei Stellen (132, 134) gebildet sind, die jeweils mit einer der Kammern (110, 112) kommunizieren, und in denen die akustischen Detektoren (122, 124) angeordnet sind.

6. Vorrichtung (100) nach Anspruch 5, bei der:
- die Kapillaren (114, 116) die gesamte Dicke der zweiten Schicht (156) durchsetzen, wobei die erste und die dritte Schicht (154, 158), zwischen denen sich die zweite Schicht (156) befindet, eine obere und eine untere Wand der zwei Kapillaren (114, 116) bilden;
- die Kammern (110, 112) und die erste Aufnahme (108) die gesamte Dicke der dritten Schicht (158) durchsetzen, wobei die zweite und die vierte Schicht (156, 160), zwischen denen sich die dritte Schicht (158) befindet, eine obere und eine untere Wand der Kammern (110, 112) und der ersten Aufnahme (108) bilden;
- die Stellen (132, 134) die gesamte Dicke der vierten Schicht (160) durchsetzen;
- die Öffnungen (118, 120) die gesamt Dicke der dritten und der vierten Schicht (158, 160) durchsetzen.

7. Vorrichtung (100) nach einem der Ansprüche 1 oder 2, bei der die fotoakustische Zelle (106) aus einem monolithischen Stück von verschmolzenen Pulvern gebildet ist.

8. Vorrichtung (100) nach einem der vorhergehenden Ansprüche, bei der die Vorrichtung (108) wenigstens ein Kollimationssystem (150) umfasst, das wenigstens eine Linse umfasst, und bei der die Lichtquelle (102) optisch mit einer Eingangsfläche (105) der ersten photonischen Schaltung (104) durch das wenigstens eine Kollimationssystem (150) gekoppelt ist, das wenigstens eine Linse umfasst, und bei der die erste photonische Schaltung (104) wenigstens einen Wellenleiter bildet.

9. Vorrichtung (100) nach einem der Ansprüche 1 bis 7, bei der die Lichtquelle (102) dazu ausgelegt ist, einen Lichtstrahl zu emittieren, der mehrere Wellenlängen hat, und gegen die erste photonische Schaltung (104) angeordnet ist, die eine Multiplexer-Demultiplexerschaltung mit Wellenleiternetz bildet.

10. Vorrichtung (100) nach einem der Ansprüche 1 bis 7, bei der die Vorrichtung (100) wenigstens eine optische Faser (152) umfasst, und bei der die Lichtquelle (102) optisch mit einer Eingangsfläche (105) der ersten photonischen Schaltung (104) durch die wenigstens eine optische Faser (152) gekoppelt ist, und bei der die erste photonische Schaltung (104) wenigstens einen Wellenleiter oder eine Multiplexer-Demultiplexerschaltung mit Wellenleiternetz bildet.

11. Vorrichtung (100) nach einem der vorhergehenden Ansprüche, ferner umfassend wenigstens ein erstes Kühlsystem (142), das dazu ausgelegt ist, die Lichtquelle (102) thermisch zu regeln, und, wenn die Lichtquelle (102) nicht gegen die erste photonische Schaltung (104) angeordnet ist, ein zweites Kühlsystem (144), das dazu ausgelegt ist, die fotoakustische Zelle (106) unabhängig von der Lichtquelle (102) thermisch zu regeln.

12. Vorrichtung (100) nach einem der vorhergehenden Ansprüchen, bei der die Vorrichtung (100) einen optischen Detektor (148) umfasst, und bei der die fotoakustische Zelle (106) ferner wenigstens eine zweite Aufnahme (140) umfasst, die auf eine Ausgangsfläche (111) der ersten Kammer (110) mündet, und bei der die Vorrichtung (100) ferner wenigstens eine zweite photonische Schaltung (146) umfasst, die optisch die Ausgangsfläche (111) der ersten Kammer (110) mit dem optischen Detektor (148) koppelt, wobei die wenigstens eine zweite photonische Schaltung (149) auf entfernbare Weise in der zweiten Aufnahme (140) angeordnet ist.

13. Vorrichtung (100) nach einem der vorhergehenden Ansprüche, bei der die fotoakustische Zelle (106) mit einem oder mehreren Metallen gebildet ist.

14. Vorrichtung (100) nach einem der vorhergehenden Ansprüche, bei der ein Abstand zwischen den zwei Kapillaren (114, 116) ungefähr gleich der Hälfte der Länge von wenigstens einer der Kammern (110, 112) ist.

15. Gasdetektionsvorrichtung, umfassend wenigstens eine Vorrichtung (100) nach einem der vorhergehenden Ansprüche und Gaseingangs-und Ausgangskanäle, die mit den Kammern (110, 112) der fotoakustischen Detektionsvorrichtung (100) kommunizieren, und bei der die wenigstens eine Wellenlänge des Lichtstrahls, der durch die Lichtquelle (102) emittiert werden kann, wenigstens einer Absorptionswellenlänge wenigstens eines Gases entspricht, das detektiert werden soll.

16. Verfahren zur Realisierung einer modularen fotoakustischen Detektionsvorrichtung (100), umfassend wenigstens die folgenden Schritte:
- Realisieren wenigstens einer fotoakustischen Zelle (106), die wenigstens zwei Kammern (110, 112) umfasst, die durch wenigstens zwei Kapillaren (114, 116) verbunden sind und einen differenziellen akustischen Resonator vom Helmholtztyp bilden;
- Koppeln von akustischen Detektoren (122, 124) mit den Kammern (110, 112);
- Realisieren wenigstens einer Lichtquelle (102), die dazu ausgelegt ist, einen Lichtstrahl mit wenigstens einer Wellenlänge zu emittieren, die dazu ausgelegt ist, die fotoakustische Zelle (106) in Resonanz zu versetzen, und
- Realisieren wenigstens einer ersten photonischen Schaltung (104), die die Lichtquelle (102) optisch mit einer Eingangsfläche (109) einer ersten von den Kammern (110) koppelt;
**dadurch gekennzeichnet, dass** das Verfahren ferner die folgenden Schritte umfasst:
- Bilden einer ersten Aufnahme (108) in der akustischen Zelle (106), die auf die Eingangsfläche (109) der ersten Kammer (110) mündet; und
- Anordnen der wenigstens einen ersten photonischen Schaltung (104) auf entfernbare Weise in der ersten Aufnahme (108).

17. Verfahren nach Anspruch 16, bei dem:
- die Realisierung der fotoakustischen Zelle (106) die Realisierung wenigstens eines Stapels aus einer ersten und einer zweiten Materialschicht (126, 128) umfasst, in denen durch chemisches Ätzen, durchgeführt in einem Teil der Dicke von jeder der ersten und der zweiten Schicht (126, 128), die Kammern (110, 112), die Kapillaren (114, 116), die erste Aufnahme (108), wenigstens zwei Öffnungen (118, 120), die jeweils in eine der Kapillaren (114, 116) münden, und wenigstens zwei Stellen (132, 134) gebildet werden, die jeweils mit einer der Kammern (110, 112) kommunizieren, und in denen die akustischen Detektoren (122, 124) angeordnet sind, oder
- die Realisierung der fotoakustischen Zelle (106) die Realisierung wenigstens eines Stapels aus einer ersten, einer zweiten, einer dritten und einer vierten Materialschicht (154, 156,158, 160) umfasst, in denen durch chemisches Ätzen oder mittels Laser, durchgeführt in der gesamten Dicke von jeder von der zweiten, der dritten und der vierten Schicht (156, 158, 160), die Kammern (110, 112), die Kapillaren (114, 116), die erste Aufnahme (108), wenigstens zwei Öffnungen (118, 120), die jeweils in eine der Kapillaren (114, 116) münden, und wenigstens zwei Stellen (132, 134) gebildet werden, die jeweils mit einer der Kammern (110, 112) kommunizieren und in denen die akustischen Detektoren (122, 124) angeordnet sind, oder
- die fotoakustische Zelle (106) aus einem monolithischen Stück aus verschmolzenen Metallpulvern gebildet wird, das durch 3D-Druck erhalten wird.

## Claims

1. Modular photoacoustic detection device (100) comprising at least:
- a photoacoustic cell (106) including at least two chambers (110, 112) connected by at least two capillaries (114, 116) and forming a Helmholtz type differential acoustic resonator;
- acoustic detectors (122, 124) coupled to the chambers (110, 112);
- a light source (102) capable of emitting a light beam having at least one wavelength capable of exciting a gas intended to be detected and which can be modulated to a resonance frequency of the photoacoustic cell (106); and
- a first photonic circuit (104) optically coupling the light source (102) to an input face (109) of a first of the chambers (110);
**characterized in that** the detection device (100) comprises a first housing (108) which is formed in the acoustic cell (106) and emerging on the input face (109) of the first chamber (110), and **in that** the first photonic circuit (104) is arranged in a detachable manner in said first housing (108).

2. Device (100) according to claim 1, wherein the acoustic detectors (122, 124) are coupled in a detachable manner to the photoacoustic cell (106).

3. Device (100) according to one of previous claims, wherein the photoacoustic cell (106) comprises at least one stack of a first and of a second layers (126, 128) of material in which are formed the chambers (110, 112), the capillaries (114, 116), the first housing (108), at least two openings (118, 120) each emerging in one of the capillaries (114, 116) and at least two locations (132, 134) each communicating with one of the chambers (110, 112) and in which the acoustic detectors (122, 124) are arranged.

4. Device (100) according to claim 3, wherein:
- the locations (132, 134) are formed in a part of the thickness of the first layer (126) and cross through an upper face (130) of the first layer (126);
- the openings (118, 120) cross through the entire thickness of the first layer (126);
- a first part of each of the chambers (110, 112) is formed in a part of the thickness of the first layer (126) and crosses through a lower face (136) of the first layer (126) opposite to the upper face (130) of the first layer (126);
- the capillaries (114, 116) are formed in a part of the thickness of the first layer (126) and cross through the lower face (136) of the first layer (126);
- a second part of each of the chambers (110, 112) is formed in a part of the thickness of the second layer (128) and crosses through an upper face (138) of the second layer (128) which is arranged against the lower face (136) of the first layer (126), the first and second parts of each of the chambers (110, 112) being arranged facing each other;
- the first housing (108) is formed in a part of the thickness of the second layer (128) and crosses through the upper face (138) of the second layer (128).

5. Device (100) according to one of claims 1 or 2, wherein the photoacoustic cell (106) comprises at least one stack of a first, second, third and fourth layers (154, 156, 158, 160) of material in which are formed the chambers (110, 112), the capillaries (114, 116), the first housing (108), at least two openings (118, 120) each emerging in one of the capillaries (114, 116) and at least two locations (132, 134) each communicating with one of the chambers (110, 112) and in which the acoustic detectors (122, 124) are arranged.

6. Device (100) according to claim 5, wherein:
- the capillaries (114, 116) cross through the entire thickness of the second layer (156), the first and third layers (154, 158) between which is located the second layer (156) forming upper and lower walls of the two capillaries (114, 116);
- the chambers (110, 112) and the first housing (108) cross through the entire thickness of the third layer (158), the second and fourth layers (156, 160) between which is located the third layer (158) forming upper and lower walls of the chambers (110, 112) and of the first housing (108);
- the locations (132, 134) cross through the entire thickness of the fourth layer (160);
- the openings (118, 120) cross through the entire thickness of the third and fourth layers (158, 160).

7. Device (100) according to one of claims 1 or 2, wherein the photoacoustic cell (106) is formed of a monolithic part of sintered powders.

8. Device (100) according to one of previous claims, wherein the device (100) comprises at least one collimation system (150) comprising at least one lens, and wherein the light source (102) is optically coupled to an input face (105) of the first photonic circuit (104) by said at least one collimation system (150) comprising at least one lens, and wherein the first photonic circuit (104) forms at least one waveguide.

9. Device (100) according to one of claims 1 to 7, wherein the light source (102) is capable of emitting a light beam having several wavelengths and is arranged against the first photonic circuit (104) which forms an arrayed waveguide grating multiplexer - demultiplexer circuit.

10. Device (100) according to one of claims 1 to 7, wherein the device (100) comprises at least one optic fiber (152), and wherein the light source (102) is optically coupled to an input face (105) of the first photonic circuit (104) by said at least one optic fiber (152), and wherein the first photonic circuit (104) forms at least one waveguide or an arrayed waveguide grating multiplexer - demultiplexer circuit.

11. Device (100) according to one of previous claims, further comprising at least one first cooling system (142) capable of thermally adjusting the light source (102) and, when the light source (102) is not arranged against the first photonic circuit (104), a second cooling system (144) capable of thermally adjusting the photoacoustic cell (106) independently of the light source (102).

12. Device (100) according to one of previous claims, wherein the device (100) comprises an optical detector (148), and wherein the photoacoustic cell (106) further comprises at least one second housing (140) emerging on an output face (111) of the first chamber (110), and wherein the device (100) further comprises at least one second photonic circuit (146) optically coupling the output face (111) of the first chamber (110) to said optical detector (148) , said at least one second photonic circuit (149) being arranged in a detachable manner in the second housing (140).

13. Device (100) according to one of previous claims, wherein the photoacoustic cell (106) is formed of one or more metals.

14. Device (100) according to one of previous claims, wherein a distance between the two capillaries (114, 116) is equal to around half of the length of at least one of the chambers (110, 112).

15. Gas detection device, comprising at least one device (100) according to one of previous claims and gas input and output channels communicating with the chambers (110, 112) of the photoacoustic detection device (100), and wherein said at least one wavelength of the light beam capable of being emitted by the light source (102) corresponds to at least one absorption wavelength of at least one gas intended to be detected.

16. Method for producing a modular photoacoustic detection device (100), comprising at least the steps of:
- producing at least one photoacoustic cell (106) including at least two chambers (110, 112) connected by at least two capillaries (114, 116) and forming a Helmholtz type differential acoustic resonator;
- coupling of acoustic detectors (122, 124) to the chambers (110, 112);
- producing at least one light source (102) capable of emitting a light beam having at least one wavelength capable of making the photoacoustic cell (106) resonate and
- producing at least one first photonic circuit (104) optically coupling the light source (102) to an input face (109) of the first of the chambers (110);
**characterized in that** the method further comprises the steps of:
- making a first housing (108) in the acoustic cell (106) which emerges on the input face (109) of a first chamber (110); and
- arrangement of said at least one first photonic circuit (104) in a detachable manner in said first housing (108).

17. Method according to claim 16, wherein:
- the production of the photoacoustic cell (106) comprises the production of at least one stack of a first and of a second layers (126, 128) of material in which are formed, by chemical etching implemented in a part of the thickness of each of the first and second layers (126, 128), the chambers (110, 112), the capillaries (114, 116), the first housing (108), at least two openings (118, 120) each emerging in one of the capillaries (114, 116) and at least two locations (132, 134) each communicating with one of the chambers (110, 112) and in which the acoustic detectors (122, 124) are arranged, or
- the production of the photoacoustic cell (106) comprises the production of at least one stack of a first, second, third and fourth layers (154, 156, 158, 160) of material in which are formed, by chemical etching or laser implemented in the entire thickness of each of the second, third and fourth layers (156, 158, 160), the chambers (110, 112), the capillaries (114, 116), the first housing (108), at least two openings (118, 120) each emerging in one of the capillaries (114, 116) and at least two locations (132, 134) each communicating with one of the chambers (110, 112) and in which the acoustic detectors (122, 124) are arranged, or
- the photoacoustic cell (106) is formed of a monolithic part of sintered metal powders obtained by 3D printing.
